Europäisches Patentamt

European Patent Office

Office européen des brevets

(19)

(11) **EP 0 874 523 B1**

(12) **EUROPEAN PATENT SPECIFICATION**

(45) Date of publication and mention
of the grant of the patent:
**03.03.2004 Bulletin 2004/10**

(51) Int Cl.7: **H04N 7/01**, H04N 5/44

(21) Application number: **97830188.5**

(22) Date of filing: **24.04.1997**

(54) **Method for motion-estimated and compensated field rate up-conversion (FRU) for video applications, and device for actuating such a method**

Verfahren zur Erhöhung der bewegungsgeschätzten und bewegungskompensierten Bildfrequenz für Videoanwendungen, und Vorrichtung zur Verwendung eines solchen Verfahrens

Méthode d'augmentation de fréquence de trames utilisant l'estimation et la compensation de mouvement pour des applications vidéo, et appareil mettant en oeuvre une telle méthode

(84) Designated Contracting States:
**DE FR GB IT**

(43) Date of publication of application:
**28.10.1998 Bulletin 1998/44**

(73) Proprietor: **STMicroelectronics S.r.l.**
**20041 Agrate Brianza (Milano) (IT)**

(72) Inventors:
 • **Mancuso, Massimo**
   **20052 Monza (Milano) (IT)**
 • **Poluzzi, Rinaldo**
   **20125 Milano (IT)**
 • **D'Alto, Viviana**
   **20134 Milano (IT)**
 • **Molinari, Luca**
   **29100 Piacenza (IT)**

(74) Representative: **Gatti, Enrico**
**Mittler & C. s.r.l.**
**Via Lombardia, 20**
**20131 Milano (IT)**

(56) References cited:
**EP-A- 0 650 293          EP-A- 0 684 726**

 • **KOIVUNEN T ET AL: "Motion estimation using combined shape and edge matching" SIGNAL PROCESSING: IMAGE COMMUNICATION, JUNE 1994, NETHERLANDS, vol. 6, no. 3, ISSN 0923-5965, pages 241-252, XP000451928**
 • **BRUBAKER D I: "Fuzzy-logic system solves control problem" EDN, 18 JUNE 1992, USA, vol. 37, no. 13, ISSN 0012-7515, pages 121-126, 128, XP000301374**

**Description**

The present invention relates to a method for motion estimated and compensated Field Rate Up-conversion (FRU) for video applications, and to a device arranged to execute such method. More particularly, the invention relates to a method based on the so-called "block-matching technique".

The market introduction of high-end TV sets, based on 100 Hz Cathodic Ray Tubes (CRTs), required the development of reliable Field Rate Up-conversion (FRU) techniques, to remove artifacts such as large area flicker and line flicker.

Methods for FRU are known (hereafter referred to as "standard FRU methods") which interpolate the missing image fields to be displayed on the CRT without performing an estimation and compensation of motion of moving objects in successive image fields.

This standard FRU methods are satisfactory in improving the quality of an image and reducing artifacts such as large-area flicker or line flicker. However, when FRU is performed by means of the standard methods new artifacts can appear in the displayed image. In particular, if the image contains moving objects like subtitles, motion judder is introduced. In fact, the interpolation algorithm is not able to detect the objects' motion, and this can lead to interpolated fields wherein the moving objects are displayed in wrong positions.

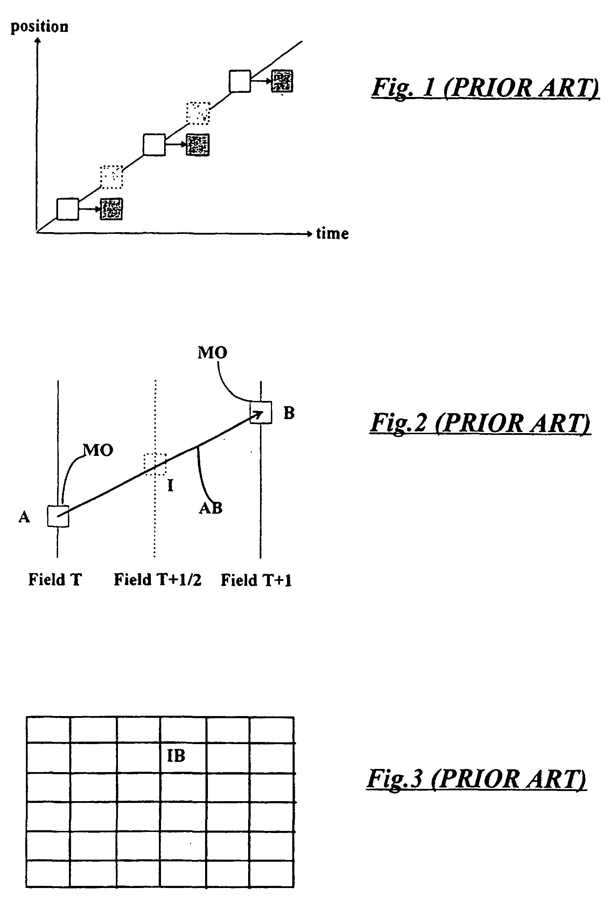

The problem is better understood by referring to Figure 1, wherein the motion trajectory of a moving object (white squares) in the original (i.e. transmitted and received) image fields is supposed to be a straight line. If the missing fields result from interpolation by means of a standard FRU method (i.e. whithout motion estimation and compensation), the position of the moving object in the interpolated fields (dark gray squares) is not as expected by the observer (dotted squares).

Such artifacts are visible and induce a blurring effect of fast moving objects, which can reduce considerably the quality of the displayed images.

In order to avoid such a blurring effect and to reduce artifacts, FRU methods have been proposed capable of performing a motion estimation and compensation of moving objects in the image fields (see e.g. EP-A-0 650 293 and Signal Processing Image Communication Vol. 6 (1994), No. 3, Amsterdam, Netherlands, pp. 241-252). Substantially, motion estimation and compensation provides for detecting the moving parts of the received image fields and interpolating the missing fields according to the estimated motion.

Further, a motion-compensated scan rate converter is known (EP-A-0 684 726), in which a decision as to inter- or intra-frame interpolation is based on fuzzy logic.

The movement of objects in consecutive image fields can be represented by so-called "motion vectors".

With reference to Figure 2, let's consider an image containing moving objects. Between two consecutive received image fields, the moving objects will have changed their position: for example, object MO which in the previous field (Field T) is in position A, in the current field (Field T+1) is in position B. A motion exists from the previous field to the current field, and this motion can be represented by a vector AB called motion vector.

The motion vector AB represents the motion of object MO from position A in the previous field to position B in the current field: starting from position A in the previous field, applying to object MO the motion vector AB, the object MO is translated into position B in the current field. The position I of the object MO in the missing field (Field T+1/2) that has to be interpolated, must be calculated by the interpolation of the previous field and the current field taking account of the respective positions A and B of the moving object MO. If object MO does not change position between the previous field and the current field, (i.e., if A and B are the same), position I in the missing field is obtained by the translation of A with a motion vector |AB|/2. In this way, it is possible to avoid the blurring effect and the missing field is interpolated with the moving object in the right position.

Theoretically, for each pixel of a field a corresponding motion vector could be calculated. However this would enormously increase the number of calculations, and the memory requirements. In the practice, assuming that the dimensions of the objects in the image are always larger than that of a pixel, the image field is divided into image blocks IB (Figure 3), and the motion vector for each block is calculated. The dimension of the blocks in terms of pixels is generally chosen on an experimental basis. The position of a block in a field is identified by the coordinates of the first pixel (upper-left) of this block in this field.

A further assumption which is normally made is that the movement of each block is rigid and translational only.

The method generically provides for detecting the moving blocks in two consequent image fields, and interpolating the missing fields according to the new positions of the blocks.

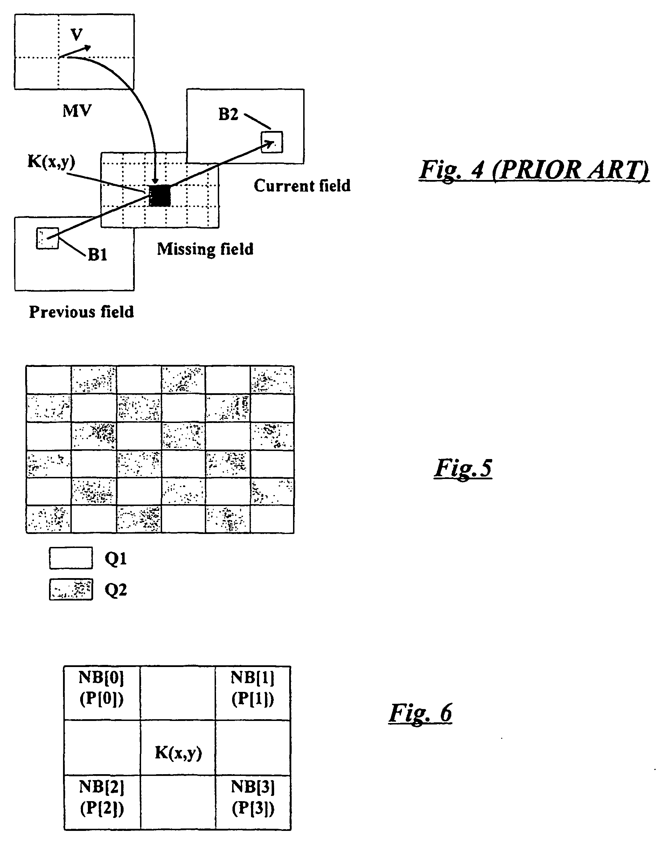

As shown in Figure 4, a matrix MV (Motion Vectors) is associated to the pattern of blocks of an image field. This matrix MV contains the motion vector of each block of the pattern. To simplify the implementation of the algorithm, it is assumed that the motion vectors of matrix MV correspond to the motion vectors of the blocks of the missing field. To each block K(x,y) of the missing field, that has a pre-definite position x, y (where x and y are the coordinates of the upper-left pixel of the block), there corresponds a motion vector. The position of the block in the missing field is at the middle between the position of a corresponding block B1 in the previous field and the position of a corresponding block B2 in the current field, blocks B1 and B2 being related by the motion vector V in matrix MV.

Scanning the matrix MV, thanks to the position of the motion vector in the matrix and the value of this motion vector, the positions of the blocks B1 and B2 where we have to apply the motion in the previous and current field are easily available.

Considering a generic block K(x,y) in the missing field to be interpolated, where (x,y) are the coordinates identifying the position of block K, the corresponding vector in matrix MV is a vector V(dx,dy), and the corresponding blocks B1, B2 in the previous and current field will be at positions:

$$\text{previous field: } B1(x-dx;y-dy); \text{ current field: } B2(x+dx;y+dy). \tag{1}$$

Thus, once the matrix MV of motion vectors has been built, the motion of each block between consecutive image fields is determined, and the missing fields can be interpolated with the blocks in correct positions.

To build up the matrix MV of motion vectors, the image blocks are scanned starting from the upper-left one down to the bottom-right one. According to the so-called "block-matching" technique, for each image block some neighboring blocks are considered, together with their respective motion vectors; for those neighbouring blocks which preceeds the block under examination in the scanning sequence of the image blocks, the already calculated motion vectors are used; for those neighbouring blocks following the block under consideration in the scanning sequence, for which the new motion vectors has not yet been calculated, the motion vectors of the previously calculated and stored matrix MV are used. The motion vector associated to the block under consideration is then calculated on the basis of the motion vectors of the neighbouring blocks.

The method involves a recursive algorithm, and the performance of the method, and thus the results of the displayed image, depends on the choice of the neighbourings blocks and on the way in which the motion vector for the block is calculated starting from the motion vectors of the neighbouring blocks.

In view of the state of the art, it is an object of the present invention to provide a method for motion estimation and motion compensated FRU.

According to the present invention, such an object is achieved by means of a method for motion estimation for use in motion compensated field rate up-conversion providing for:

a) dividing an image field to be interpolated into a plurality of image blocks, each image block made up of a respective set of image elements of the image field to be interpolated;

b) for each image block of at least a sub-plurality of said plurality of image blocks, considering a group of neighboring image blocks;

c) determining an estimated motion vector for said image block, describing the movement of said image block from a previous image field to a following image field between which the image field to be interpolated is comprised, on the basis of predictor motion vectors associated to said group of neighboring image blocks;

d) determining each image element of said image block by interpolation of two corresponding image elements in said previous and following image fields related by said estimated motion vector; characterized in that step c) provides for:

c1) applying to said each image block each of said predictor motion vector to determine a pair of corresponding image blocks in said previous and following image fields, respectively;

c2) for each of said pairs of corresponding image blocks, evaluating an error function which is the Sum of luminance Absolute Difference (SAD) between corresponding image elements in said pair of corresponding image blocks;

c3) for each pair of said predictor motion vectors, evaluating a degree of homogeneity;

c4) for each pair of said predictor motion vectors, applying a fuzzy rule having an activation level which is higher the higher the degree of homogeneity of the pair of predictor motion vectors and the smaller the error functions of the pair of predictor motion vectors;

c5) determining an optimum fuzzy rule having the highest activation level, and determining the best predictor motion vector of the pair associated to said optimum fuzzy rule having the smaller error function;

c6) determining the estimated motion vector for said image block on the basis of said best predictor motion vector.

Also according to the present invention, there is provided a device arranged to execute such a method, characterized by comprising:

-) image element storage means for storing image elements of the previous and following image fields for creating a search area in the previous and following image fields;

-) addressing means for addressing selected image elements in said storage means;

-) motion vector storage means for storing the estimated motion vectors;

-) first computation means supplied with data by said storage means for evaluating said error functions associated to said predictor motion vectors;

-) a fuzzy computation unit supplied with data by said first computation means and said motion vector storage means for determining said best predictor motion vector by applying said fuzzy rule to each pair of predictor motion vectors and to the values of the associated error functions;

-) interpolation means supplied with data by said storage means for determining each image element of said image block by interpolation of two corresponding image elements in said previous and following image fields related by said estimated motion vector.

The features and advantages of the present invention will be made apparent by the following detailed description of a particular embodiment thereof, illustrated by way of a non-limiting example in the annexed drawings, wherein:

Figure 1 schematically shows the results of a standard (non motion compensated) FRU method;
Figure 2 schematically shows the change of position of a moving object between two consecutive received image fields;
Figure 3 schematically shows an image field divided in a pattern of image blocks;
Figure 4 schematically shows the operation of a motion estimated and compensated FRU method;
Figure 5 schematically shows two quincunx pattern of image blocks of an image field;
Figure 6 schematically shows an image block for which a motion vector is to be evaluated, and a pattern of neighboring blocks used to perform the method of the invention;
Figure 7 schematically shows portions of two corresponding image blocks in a previous and in a current image fields;
Figures 8 to 11 depict membership functions used to perform a fuzzy calculation;
Figure 12 schematically shows a pattern of motion vectors used to interpolate a motion vector;
Figures 13 and 14 schematically show a pattern of motion vectors used to implement an "erosion" process;
Figure 15 schematically shows the interpolation of a pixel of a field to be interpolated;
Figure 16 schematically shows an interpolation process for determining missing pixels in the previous and current fields;
Figure 17 is a schematic block diagram of a device according to the invention; and
Figures 18 to 23 are schematic block diagrams of some blocks of the device of Figure 17.

As described in connection with Figure 3, in order to keep the calculation to be performed to a reasonable number each image field is divided into image blocks 1B of equal dimension. As previously mentioned, the dimension of each block 1B is determined on an experimental basis; a suitable dimension has proved to be 8x8 pixels of the image frame (containing both the odd lines and the even lines), i.e. 4x8 pixels of the image field (containing either the odd or the even lines). With such dimension, the number of blocks per image field is (288/4)x(720/8)=72x90 blocks, where 288 is the number of lines and 720 is the number of columns of a field in standard interlaced scanning.

Preferably, in order to further reduce the number of calculations and the required memory resources, instead of evaluating the motion vectors for all the blocks of the image field, only the blocks belonging to either one or the other of the two so-called "quincunx sub-sampling patterns" Q1, Q2 shown in Figure 5 are considered. The division of the field into two quincunx patterns enables to divide the rate of calculation nearly by two. However, it is evident that this is not to be intended as a limitation, because it could be possible to consider all the blocks of the field.

As shown in Figure 6, for each generic block K(x,y) of the chosen quincunx pattern, four neighboring blocks NB[0]-NB[3] are considered, together with their associated motion vectors P[0]-P[3] ("predictor motion vectors"). Experimentally, it has been verified that the best choice involves the nearest blocks in the two diagonal directions; this choice is also compatible with the quincunx sub-sampling of the blocks in the image field. For the two blocks NB[0], NB[1] preceding block K(x,y) in the image block scanning sequence, the values of motion vectors P[0] and P[1] have already been calculated and are available in the current motion vector matrix, while for the blocks NB[2], NB[3] following block K(x,y) the values of motion vectors P[2] and P[3] are extracted from the previous motion vector matrix, which has been previously calculated and stored.

Each one of the four motion vectors P[0]-P[3] is then applied to block K(x,y). In this way, for each motion vector P[1]-P[3] two corresponding blocks, respectively in the current field and in the previous field, are determined, according to equations (1) above. Four pairs of blocks are thus determined.

In order to determine which one of the motion vectors P[i] ($i \in [0;3]$) has the best direction for the block K(x,y) under examination, for each pair of corresponding blocks obtained in the previous and current fields, an error function err[i] is calculated. The error function err[i] is the is the Sum of the luminance Absolute Difference (SAD), pixel to pixel, between the two corresponding blocks in the previous and current fields:

$$err[i] = SAD(X, Y, P[i]) =$$
$$= \sum_{\substack{x \in [0;7] \\ y \in [0;7]}} |lum(X + x, Y + y, t - 1) - lum(X + dx + x, Y + dy + y, t)|$$

where: X,Y are the coordinates of the upper-left pixel of the block found in the previous field; lum($\underline{x},\underline{y}$,t) is the luminance of the pixel at position ($\underline{x},\underline{y}$) in the current field (previous field if instead of t is t-1); P[i] is the motion vector of coordinates (dx, dy).

In this way, four error values err[i] are obtained, one for each predictor motion vector P[i].

The components of the generic precictor motion vector P[i] along the coordinate axes x, y are called P[i]x and P[i]y, respectively.

Since each image field contains either the odd or the even lines of an image frame (interlaced transmission standard), the corresponding blocks in the previous and current fields do not contain all the image lines: if for example the previous field is an odd field and the current field is an even field, the block in the previous field contains only the odd lines, while the corresponding block in the current field contains only the even lines. To compute the error function err[i] for any value of the motion vector it is necessary to have, in the corresponding blocks in the previous and current fields, both the odd and the even lines.

The algorithm interpolates the missing lines of the blocks necessary for the computation of the error function err[i] depending on the parity of the first line of each block. Assuming that the y-component of the motion vectors is always even, then the first pixel of a block in the previous field and the first pixel of the corresponding block in the current field will belong to image lines with the same line parity.

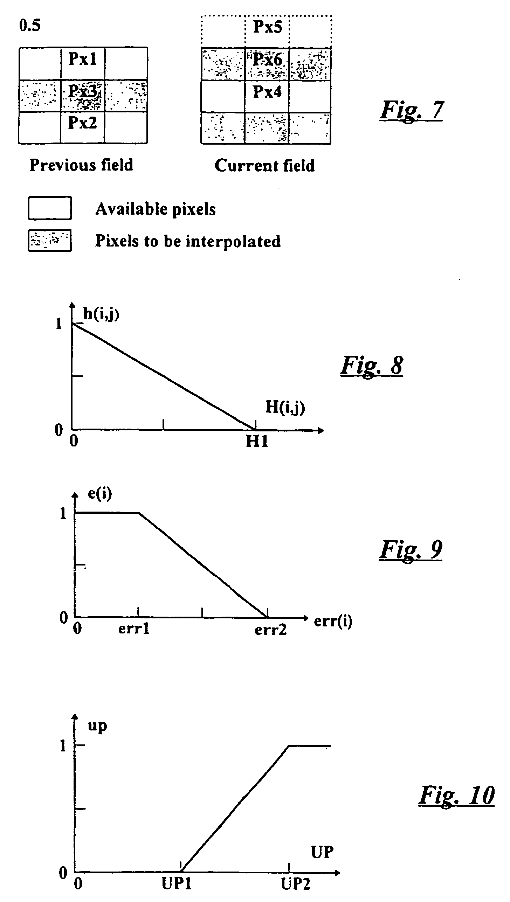

Referring to Figure 7, where only one case is drawn, the other being obviously symmetrical, in each image block it is necessary to interpolate one line over two. To perform the interpolation, a median filter is advantageously used: the pixels belonging to the missing lines of the block are therefore given by:

$$Px3 = MED(Px1,Px2,Px4)$$

When the pixel to be interpolated is on the first or the last line of the block, like the pixel Px6 in Figure 7, the pixel just before can be used (if it is possible, otherwise it is possible to use line repetition) to manage this interpolation, and the result is:

$$Px6 = MED(Px4,Px5,Px1).$$

It should be noted that this interpolation depends on the motion vector: in fact, the value of the missing pixel Px3 of the block in the previous field is interpolated using the value of the available pixel Px4 of the corresponding block in the current field, obtained by applying the motion vector P[i]. In this way the quality of the interpolation is greatly improved.

So, for each predictor motion vector P[i], two corresponding blocks in the previous and current field are determined, the missing lines of each of the two corresponding blocks are interpolated, and then the corresponding error function err[i] is evaluated.

To see which one of the four predictor motion vectors P[i] fits best the motion of block K(x,y) between the previous and the current field, both the value of the error functions err[i] and a "degree of homogeneity" between each pair of different predictor motion vectors P[i] and P[j] (i,j $\in$ [0;3] and i≠j), is analyzed. To do this, according to the invention, a fuzzy computation is performed applying the following fuzzy rule to each pair of predictor motion vectors P[i], P[j]:

*"If the vectors* P[i] *and* P[j] *are homogeneous **and** err[i] *is small **and** err[j] *is small **then** this function is lugh"*;
six different pairs of predictor motion vectors exist, so a total of six fuzzy rules are to be evaluated

To test the degree of homogeneity between two different predictor motion vectors, the following homogeneity value H(ij) is first computed:

H(i, j) = |P[i]x - P[j]x| + |P[i]y - P[j]y|.

Then a membership function, such as the one depicted in Figure 8, is applied to the homogeneity value H(i, j) to obtain a fuzzy variable h(i,j), whose value indicates the degree of membership of the value of H(i,j) to the fuzzy set "homogeneous". In Figure 8, H1 can be a value preferably comprised between 7 and 14.

Similarly, a membership function such as the one depicted in Figure 9 is applied to the value of the error functions err[i] to obtain a fuzzy variable e(i) whose value is indicative of the degree of membership of the value of err[i] to the fuzzy set "small". In Figure 9, err1 is a value preferably comprised between 40 and 70, and err2 is a value preferably comprised between 180 and 200.

Each one of the six fuzzy rules provides a value (activation level of the fuzzy rule) r[k] (k $\in$ [0;5]), which is: r[k] = min(h(i,j),e(i),e(j)).

Additionally, a further (seventh) fuzzy rule is evaluated:

"***If*** all the err[i] *values are high **and*** P[0] *and* P[1] *are high **then*** this function is high".

First the following values are computed:

$$UP(x)=|P[0]x+P[1]x| \; ; \; UP(y)=|P[0]y+P[1]y|$$

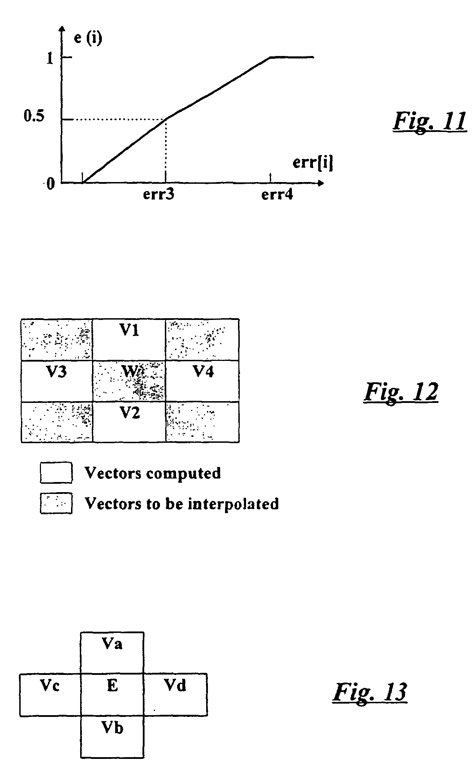

Then a membership function such as the one depicted in Figure 10 is applied to each of the values of UP(x) and UP(y) to obtain two fuzzy variables up(x) and up(y) indicative of the degree of membership of values UP(x) and UP(y) to a first fuzzy set "high". In Figure 10, UP1 is a value preferably comprised between 4 and 9, and UP2 is a value preferably comprised between 12 and 20.

Finally, a membership function such as the one depicted in Figure 11 is applied to the values of the error functions err[i] to obtain a fuzzy variable e'(i) whose value is indicative of the degree of membership of the values of err[i] to a second fuzzy set "high". In Figure 11, err3 is a value preferably comprised between 280 and 320, and err4 is a value preferably comprised between 380 and 420.

The value (activation level) r[6] of the seventh fuzzy rule is given by:

$$r[6] = min\{e'(0), e'(1), e'(2), e'(3), up(x), up(y)\}$$

The meaning of the values r[k] (k $\in$ [0;5]) and r[6] is now discussed.

For each ke [0;5], the smaller the values of the pair of error functions err[i], err[j] associated to the pair of predictor motion vectors P[i], P[j], and the smaller the difference between the two respective motion vectors P[i], P[j] the higher r[k]; in other words, the activation level r[k] of the corresponding fuzzy rule depends on the sum of absolute luminance difference (SAD) of the pixels of the corresponding blocks in the previous and current field, but also on the degree of homogeneity of the motion vectors.

As regards r[6], the higher the values of the four error functions err[i] associated to the four predictor motion vectors and the greater the predictor motion vectors P[0] and P[1], the higher r[6]. The seventh fuzzy rule has an activation level r[6] which is higher the more the situation is uncertain, i.e. when there is a large movement (P[0] and P[1] high), but none of the four predictor motion vectors seem to provide a good result in terms of error function when applied to the block K(x,y).

The pair of predictor motion vectors P[i] and P[j] for which the function r[k] (k $\in$ [0;5]) has the highest value (i.e. the pair of motion vectors for which the corresponding fuzzy rule has the highest activation level among the first six fuzzy rules) is chosen; let's r[opt] denote the highest value among r[0]-r[5]. Among the two predictor vectors P[i] and P[j] associated to said fuzzy rule, the one for which the value of the corresponding error function err[i], err[j] is minimum is called P[min].

A candidate motion vector C is then calculated according to the following algorithm:

if r[opt] + r[6] $\geq$ R$_{th}$, where R$_{th}$ is a prescribed activation level threshold, then the candidate motion vector C has the following components:

$$Cx = \frac{P[min]_x \times r[opt]}{r[opt] + r[6]}$$

$$Cy = \frac{P[min]_y \times r[opt]}{r[opt] + r[6]}$$

Thus, the components Cx and Cy of vector C are respectively equal to $P[min]_x$ and $P[min]_y$, multiplied by a weighting factor that depends on the respective activation levels of the most activated one of the first six fuzzy rules (r[opt]) and of the seventh fuzzy rule (r[6]). It follows that in a situation of uncertainty as to the choice of the best motion vector, the vector 0. is preferred. Thanks to these weighted components, the value of C depends on the characteristics of the different vectors. This means that the components are determined according to both the homogeneity of the predictor motion vectors and the error between the pairs of corresponding blocks obtained by means of the four predictor motion vectors.

If instead r[opt] + r[6] < $R_{th}$, that is if none of the fuzzy rules is sufficiently activated, then candidate vector C is made equal to the predictor motion vector P[i] for which the error function err[i] is the smallest. This means that if the errors err[i] are too high, if the vectors are not homogeneous, than the predictor motion vector with the minimum error value is directly chosen as candidate motion vector for block K(x,y), because the weighting of its components is not reliable.

A suitable value for $R_{th}$ has experimentally been determined to be 0.1.

Vector C thus calculated is the candidate motion vector for the block K(x,y) under examination. This vector could be stored in the motion vector matrix MV in the position corresponding to block K(x,y).

However, in order to improve the estimation of motion of block K(x,y), small perturbations ("updates") are applied to the candidate motion vector C to obtain updated motion vectors; each updated motion vector individuates two corresponding blocks in the previous and current fields; the error functions associated to the updated motion vectors are calculated in the way same previously explained in connection with predictor motion vectors P[i].

The updates applied to candidate motion vector C are the following:

firstly, the following set of four updates is always applied to the components Cx and Cy of vector C:

$$\begin{bmatrix} 1 \\ 0 \end{bmatrix}, \begin{bmatrix} 0 \\ 1 \end{bmatrix}, \begin{bmatrix} -1 \\ 0 \end{bmatrix}, \begin{bmatrix} 0 \\ -1 \end{bmatrix}$$

Four updated vectors Vu[1]-Vu[4] are obtained, and for each one of these the corresponding error function err is evaluated, in the same way previously described in connection with the predictor motion vectors P[i].

Then, depending on the block K(x,y) under examination, one or the other of the following set of four updates are alternatively applied to the candidate motion vector C:

$$\begin{bmatrix} 4 \\ 0 \end{bmatrix}, \begin{bmatrix} 0 \\ 2 \end{bmatrix}, \begin{bmatrix} -4 \\ 0 \end{bmatrix}, \begin{bmatrix} 0 \\ -2 \end{bmatrix} \text{ or } \begin{bmatrix} 10 \\ 0 \end{bmatrix}, \begin{bmatrix} 0 \\ 4 \end{bmatrix}, \begin{bmatrix} -10 \\ 0 \end{bmatrix}, \begin{bmatrix} 0 \\ -4 \end{bmatrix}$$

Again, four updated vectors Vu[5]-Vu[8] are obtained, and for each one the corresponding error function err is evaluated.

As visible, each update modifies only one of the components Cx and Cy of vector C.

In this way there are obtained, for each block, eight new error function values, each one corresponding to a respective updated vector Vu[1]-Vu[8].

A penalty value is then added to the error function values for the updated vectors, the value of the penalty depending on the value of the update.

To this purpose, the components of vector C Cx and Cy are examined. If the update is added to the component of C of greater value, then a first penalty value PEN1 is added to the error function value associated to that updated vector. If the update is added to the component of C of smaller value, a second penalty value PEN2 is added to the error function value associated to such updated vector, with PEN2>PEN1. Experimentally it has been found that suitable values for PEN1 and PEN2 are respectively 76 and 228. In this way, the updated vectors which have a direction more different from the direction of vector C are somehow penalized in the choice to be made.

The error functions for the updated vectors, added with the respective penalty value, form a set of eight errors functions related to eight motion vectors. The updated motion vector providing the smallest error function value is chosen as the motion vector of the block K(x,y) under consideration. Again, to this motion vector will correspond one block in the previous field and one in the current field, determined according to equations (1) above.

Up to now, the way in which the motion vector for a generic image block is estimated has been described. If all the image blocks of the missing image field to be interpolated were submitted to this calculation, a motion vector matrix MV will be straightforwardly built. However, since as previously mentioned a suitable way for reducing the number of calculations consists in estimating the motion vectors of only a subset of the image blocks of a field, namely those blocks belonging to either one or the other of the two quincunx patterns Q1, Q2 depicted in Figure 5, motion vectors for only a half of the image blocks are actually estimated according to the algorithm previously described. The motion vectors of the remaining image blocks are to be interpolated. For the interpolation, median filters are used.

With reference to Figure 12, representing a portion of the motion vector matrix MV, the white squares represent the motion vectors computed by means of the previously described algorithm, while the shaded blocks represent the motion vectors to be interpolated. If the motion vector W is to be interpolated, the four nearest motion vectors V1-V4 which have been estimated by means of the previously described algorithm are considered. The components Wx and Wy of vector W are interpolated in the following way:

$$Wx = Med(\frac{V1x + V2x}{2}, V3x, V4x)$$

$$Wy = Med(\frac{V1y + V2y}{2}, V3y, V4y)$$

In this way, the motion vector matrix MV can be completed. For every image block, a corresponding motion vector is provided in the matrix, either estimated by means of the previously described algorithm or interpolated.

The motion vector matrix can be used to interpolate the missing image field taking into account the movement of the image blocks according to the algorithm which will be described later on.

However, in order to maximize the uniformity of the motion vector field, the following "erosion" process of the motion vector field (i.e., all the motion vectors of the matrix MV) is performed before actually interpolating the missing field.

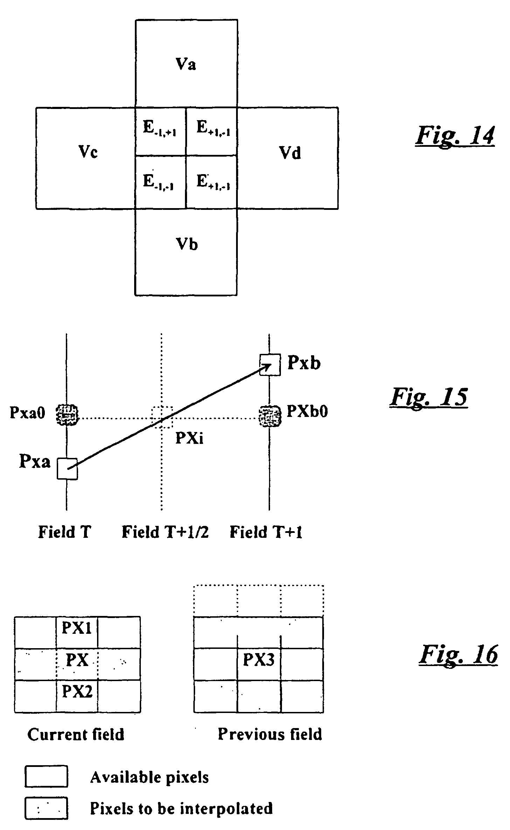

Inside the motion vector matrix, patterns of vectors like the one shown in Figure 13 are considered.

Considering a vector E in the center of such a pattern, the corresponding image block is divided in four equal sub-blocks (Figure 14); for each sub-block of said block, a respective motion vector $\{E_{-1,+1},...,E_{+1,-1}\}$ is determined according to a median filtering performed with vector E and the nearest neighboring vectors $\{Va,Vb,Vc,Vd\}$, as to have the best matching vector possible. In this way, a new ("eroded") vector matrix having four times more elements is obtained. The four sub-vectors $\{E_{-1,+1},...,E_{+1,-1}\}$ are determined as shown in the following table:

| Sub-block | Vector |
|---|---|
| $E_{-1,+1}$ | MED(Va,Vc,E) |
| $E_{+1,+1}$ | MED(Va,Vd,E) |
| $E_{-1,-1}$ | MED(Vb,Vc,E) |
| $E_{+1,-1}$ | MED(Vb,Vd,E) |

The new motion vector matrix, having four times more elements than the starting one, contains motion vectors which fits well to the motion of the picture.

Applying the motion vectors of the matrix to the different blocks of the missing field, the corresponding blocks in the previous and current field can be determined. To each pixel of the current field there corresponds a motion vector that joins the pixel of the current field to a corresponding pixel of the previous field.

As already mentioned, the previous and current fields only contain a half of the lines of an image frame; for example, the previous field contains the odd lines and the current field contains the even lines. The missing lines of each field can be interpolated in a way similar to that used to interpolate the missing pixels of the blocks in performing the evaluation of the error functions, on the basis of the motion vectors. The two fields are thus transformed into progressive fields, containing all the lines of an image frame.

To interpolate the pixels of the missing field the following procedure is used.

Referring to Figure 15, to each pixel PXi of the missing field to be interpolated (Field T+1/2 in the figure), a motion vector is assigned checking the image block (more precisely, the sub-block) to which the pixel PXi belongs. This motion vector individuates two corresponding pixels belonging to the previous and to the current field, indicated as PXa and PXb, respectively.

The value of pixel PXi can be determined on the basis of the average value of PXa and PXb, namely: PXi= (PXa+PXb)/2.

Better results are obtained if the following interpolation method is followed. In Figure 15, the pixels individuated in the previous and current field by the zero motion vector crossing the position of pixel PXi are $PXa_0$ and $PXb_0$. The value of pixel PXi is determined by performing the following median filtering:

$$PXi = MED(\frac{PXa_0 + PXb_0}{2}, PXa, PXb)$$

Let's consider the order the fields are received, and how the original fields and the interpolated ones are output. Field-Rate Upconversion (FRU) provides for outputting two times more fields than the original field-rate. The order is the following:

input field sequence: $O_0$, $E_0$, $O_1$,....
output field sequence: $O_0$, $Ei_{Oo}$, $Oi_{Eo}$, $Ei_{Eo}$, $O_1$,...

where:

$O_0$: original odd field containing odd image lines;
$E_0$: original even field containing even image lines;
$Oi_{Eo}$: interpolated odd field containing the odd interpolated lines of the original even field at the time of $E_0$;
$Ei_{Oo}$: interpolated even field containing the even interpolated lines between $O_0$ and $E_0$;
$Ei_{Eo}$: interpolated even field containing the even interpolated lines between $E_0$ and $O_1$.

The original odd fields are output without any change. Fields $Ei_{Oo}$ and $Ei_{Eo}$ are interpolated according to the algorithm previously described, taking into account the motion of objects between fields $O_0$ and $E_0$, and $E_0$ and $O_1$, respectively.

To interpolate the field $Oi_{Eo}$, the motion vector field calculated to estimate motion between fields $O_0$ and $E_0$ is already available, so that the pixels PX of the odd lines missing in field $E_0$ are computed by the three-point median filtering among the pixels PX1, PX2 and PX3, where PX1 and PX2 are the available pixels of the current field $E_0$ surrounding the missing pixel PX, and PX3 is the pixel of the previous field $O_0$ pointed by the motion vector associated to pixel PX (Figure 16).

Up to now motion of objects between two adiacent fields has been assumed to be present. This is the case when the image field sequence originates from a television camera (camera mode).

But when the image field sequence is originated from a movie, motion between two adiacents fields will take place only once over a couple of image frames. This is due to the particular procedure followed to transmit the movie material. Typically, a movie contains 24 pictures per second. For television broadcasting, the 24 pictures per second are converted into 25 image frames per second. In interlaced scanning, each image frame contains two interlaced image fields: so, each movie picture is converted into two image fields. Obviously, when two fields originate from the same movie picture, no motion exists between the two fields. Motion only exists between fields originating from different movie pictures, i.e. once over a couple of image frames.

Since the previously described interpolation algorithm is recursive, and when no motion exists between two consecutive fields the motion vector matrix only contains zero vectors, problems exist when at the next field (belonging to the next movie picture) motion is to be estimated, because the information of motion estimated two fields in advance has got lost. Thus, it is necessary to perform the interpolation of the missing fields according to the type of transmitted material.

To select the proper motion estimation behavior and the proper sequence of the interpolated field a film-mode detector is needed.

The proposed solution is based on accumulating (i.e., summing) the motion vectors of each vector matrix, and comparing the accumulated values between two adjacents fields.

Assuming that Ap and Ac are the accumulated motion vectors relating to the previous and current field, respectively, the normal camera mode is obtained whether the ratio between Ac and Ap (Ac/Ap) is approximately equal to 1, or it has the same trend (always increasing or always decreasing) when two adiacents frames are considered.

A register R is used to store propers values related to the Ac/Ap ratio, namely:

R=0 if 1-Th $\leq$ |Ac/Ap| $\leq$ 1+Th;

R=1 if |Ac/Ap| > 1+Th;
R=2 if |Ac/Ap| < 1-Th,

where Th is a proper threshold value.

To distinguish between camera mode and film mode, the following rules are used:

1) If [1-Th $\leq$ |Ac/Ap| $\leq$ 1+Th] and [R = 0] then camera_mode,
2) If [|(Ac/Ap| < 1-Th] and [R = 1] and [current_field_parity = even] then film_mode(phase_0);
3) If [|Ac/Ap| > 1+Th] and [R = 2] and [current_field_parity = odd] then film_mode(phase_0);
4) If [|Ac/Ap| > 1+Th] and [R = 2] and [current_field_parity = even] then film_mode(phase_1);
5) If [|Ac/Ap| < 1-Th] and [R = 1] and [current_field_parity = odd] then film_mode(phase_1);
6) else camera_mode.

Current field parity is to be considered, because the change between two movie pictures can occur either between a next odd and a previous even field, or between a next even and a previous odd field, i.e. two different film phases (film_mode(phase_0) and film_mode(phase_1)) exist.
If camera mode is detected, the previously described interpolation algorithm is performed.
If differently film mode is detected, the method provides for outputting the following field sequence (supposing that motion exists between the even field of an image frame and the odd field of the following frame):

input field sequence: $O_0$, $E_0$, $O_1$,...
output field sequence: $O_0$, $E_0$, $Oi_{E_o}$, $Ei_{E_o}$, $O_1$,...

where:

$O_0$: original odd field (odd image lines);
$E_0$: original even field (even image lines, no motion with respect to $O_0$);
$O_1$: original odd field (odd image lines, following image frame, motion with respect to $E_0$);
$Oi_{E_o}$: interpolated odd field (odd image lines, compensation of motion between $E_0$ and $O_1$);
$Ei_{E_o}$: interpolated even field (even image lines, compensation of motion between $E_0$ and $O_1$).

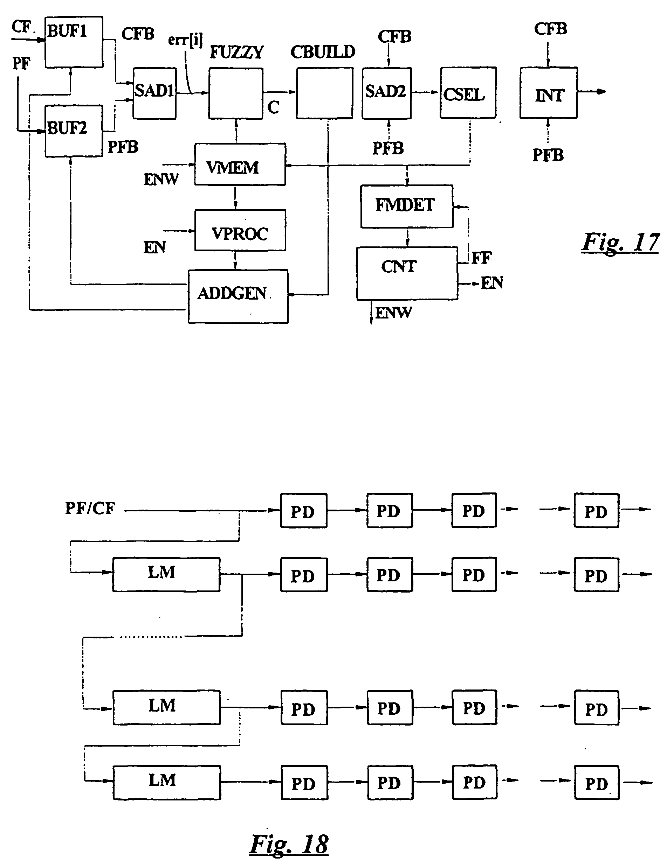

A block diagram of a device suitable for implementing the motion estimated and compensated FRU previously described is depicted in Fig.17.
In the drawing, PF and CF indicate the streams of pixels of the previous and current image fields, respectively, as received and stored in respective field memories (not shown).
PF and CF are respectively supplied to buffer units BUF1 and BUF2, suitable to create, according to the block-matching technique, portions ("search areas") of the previous and current image fields.
The outputs PFB, CFB of BUF1 and BUF2, determined by an address generator block ADDGEN that generates addresses for addressing the pixels stored in blocks BUF1 and BUF2, supply a block SAD 1 which for each generic block K(x,y) (Fig. 6) performs the evaluation of the four error functions err[i] (i $\in$ [0;3]) associated to the four initially chosen predictor motion vectors P[i] of the four neighboring blocks NB[i]; PFB and CFB also supply another block SAD2, performing the evaluation of the eight error functions err associated to the set of eight updated vectors Vu[1]-Vu[8], calculated by block CBUILD.
Due to the spatial and temporal recursive approach of the previously described algorithm, a storage unit VMEM is required to store the already estimated motion vectors, both belonging to the current and the previous vector matrix.
Blocks SAD1 and VMEM supply a block FUZZY which implements the fuzzy calculation previously described, and determines the components of the candidate motion vector C.
The output of block FUZZY (i.e., the candidate motion vector C) supplies block CBUILD which applies to the components of vector C the previously described sets of updates, to determine the eight updated motion vectors Vu[1]-Vu[8].
Block ADDGEN determines the proper image blocks pointed by the selected motion vector; block ADDGEN is supplied by the output of block VPROC and the output of block CBUILD.
The values of the error functions associated to the eight updated motion vectors Vu[1]-Vu[8], evaluated by block SAD2, are supplied to block CSEL, which, according to the algorithm previously described, selects among the eight updated vectors Vu[1]-Vu[8] the motion vector (having the smallest associated error function) to be associated to the current image block K(x,y) as estimated motion vector; this vector is then stored in the vector storage unit VMEM. A block VPROC is provided to evaluate (i.e., interpolate) the motion vectors for the image blocks not belonging to the chosen quincunx pattern, for which the fuzzy computation is not performed.

Also, block CSEL supplies a block FMDET, which is able to discriminate between camera mode and film mode according to the algorithm previously described. A control unit CNT is also provided which, in response to the result of the evaluation performed by block FMDET, controls the blocks VMEM and VPROC. Control unit CNT generates two control signals EN and ENW, respectively supplied to blocks VPROC and VMEM. Signal EN is activated when block VPROC has to interpolate a motion vector not belonging to the chosen quincunx pattern, but is disactivated during the motion estimation phase; signal ENW is activated to store the motion vector at the output of block CSEL into block VMEM.

At the end an interpolator block INT, supplied by the outputs PFB and CFB of BUF1 and BUF2, is provided to interpolate the pixels of the missing field according to the estimated motion vectors; the estimated motion vector, at the output of block VPROC, is supplied to block ADDGEN to determine the addresses of the corresponding pixels in the previous and current fields related by the estimated motion vector. The interpolator block INT then performs the interpolation of the missing pixel according to the median filtering previously described.

In the following the architecture of the main blocks of the device will be described.

Blocks BUF1 and BUF2 have the same structure depicted in Figure 18. The purpose of these two blocks is to store part of the image pixels of the previous and current fields in order to implement a search area in both the previous and the current image fields. The search area dimension is larger than the blocks among which the match is computed and its dimension determines how big is the maximum motion vector that can be estimated.

Basically, each block BUF1, BUF2 is composed by a plurality of line memories LM which store the image lines of the search area, and pixel delays PD.

The number of line memories LM affects the maximum vertical component of the motion vector that can be estimated; the number of pixel delays PD affects the maximum horizontal component of said motion vector.

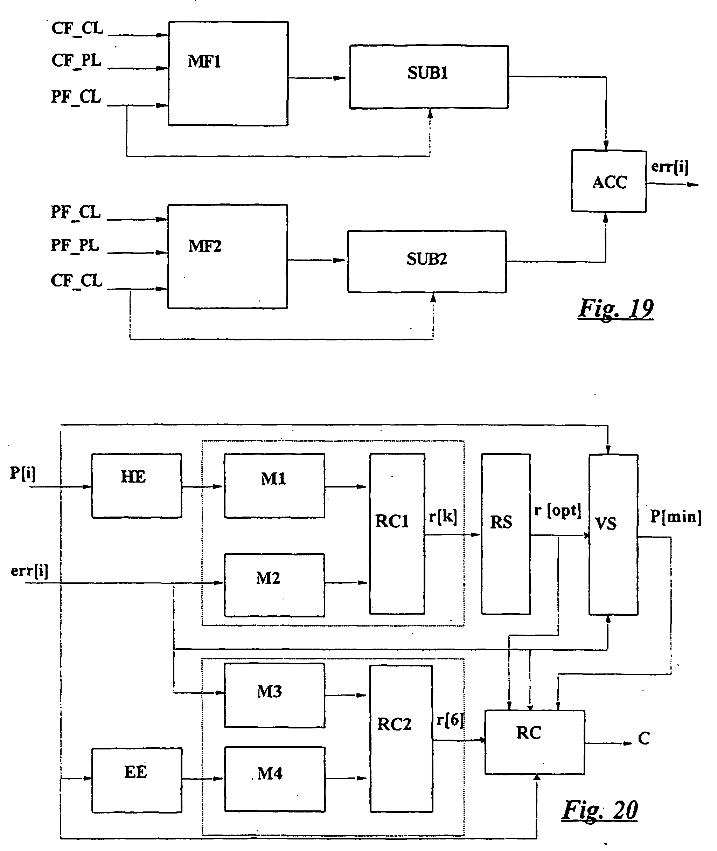

Figure 19 shows one of four identical units composing block SAD1.

For each generic block K(x,y) for which the respective motion vector is to be evaluated, block SAD1 evaluates the four error functions err[i] associated to the four predictor motion vectors P[i]. Each vector P[i] individuates two corresponding image blocks in the previous and current fields, respectively. In order to evaluate the matching degree of the two blocks pointed by the motion vector P[i], the associated error function err[i] is to be evaluated. Also, it has to be remembered that the corresponding image blocks in the previous and current fields have to be transformed into progressive format, to include all the image lines.

This is done by blocks MF1 and MF2, which perform a median filtering to interpolate the missing pixels in each block (according to the algorithm previously described in connection with Figure 7). In the drawing:

CF_CL:    current field, current line;
CF_PL:    current field, previous line;
PF_CL:    previous field, current line;
PP_PL:    previous field, previous line.

The outputs of the median filters, together with PF_CL or, respectively, CF_CL, are supplied to a respective subtractor block SUB1, SUB2, which performs the absolute difference of the luminance value of the pixels in the corresponding blocks: the outputs of the two subtractors are then stored in an accumulator block ACC.

To better understand the architecture of block SAD1, let us suppose an image block, once transformed into progressive format, has a dimension of 8*8 = 64 pixels. This means that in order to transform the block into progressive format, 32 out of the 64 pixels must be interpolated for each image block. Thus, to compute the error fnction err between two corresponding image blocks in the previous and current fields, 64 median filters and 64 subtractors are needed. The accumulator block ACC provides the cumulative error err[i]. Since block SAD1 has to calculate the error functions err[i] related to the four predictor motion vectors P[i], it has to contain four units equal to that shown in Fig. 19.

The inner architecture of block FUZZY is shown in Figure 20. Depending on considerations based on the uniformity of the four predictor motion vectors P[i] and on the associated error functions err[i], a fuzzy process will create the candidate motion vector C.

The Fuzzy Process basically consists of two parts: the first one is formed by blocks M1, M2 and RC1 and implements an inference (the first six fuzzy rules previously described) based on the degree of homogeneity and on the respective error functions err[i] of the four predictor vectors P[i] in order to select the best predictor vector among the previous four (P[min]); the second one is formed by blocks M3, M4 and RC2 and implements a sort of fall-back fuzzy rule (the seventh fuzzy rule previously described) when all the predictor vectors P[i] have high error functions err[i] and extents, so that the zero vector is in this case selected.

More particularly, block M1 implements the membership function shown in Figure 8 (on the basis of the values H(i,j) calculated by homogeneity evaluator block HE), M2 implements the membership functions shown in Figure 9, and block RC1 evaluates the activation levels r[k] (k = 0-5) of the first six fuzzy rules previously described; the output of block RC1 is therefore formed by the six activation levels r[k]. Block M3 implements the membership function depicted if Figure 11, M4 implements the membership functions depicted in Figure 10 (one for the two components UP(x), UP(y), calculated by extent evaluator block EE), and block RC2 evaluates the activation level r[6] of the seventh fuzzy rule; the output of block RC2 is therefore formed by the activation level r[6].

The four predictor vectors P[i] are provided to block FUZZY by block VMEM; the values of the four error functions err[i] are provided by block SAD1.

The output r[k] (k=0-5) of block RC1 is supplied to a block RS (Rule Selector) which selects the one among the first six fuzzy rules having the highest activation level (r[opt]). As previously described, two of the four predictor vectors P[i], P[j] are associated to each one of the first six fuzzy rules. Once the fuzzy rule with the highest activation level r[opt] has been determined, the predictor vector having the minimun error function between the two predictors associated to such a fuzzy rule is selected by block VS (Vector Selector). This vector P[min] ("best predictor") is supplied, together with the value r[opt] provided by block RS and the value r[6] provided by block RC2, to a block RC (Rule Composition) which calculates the components $C_x$, $C_y$ of the candidate motion vector C according to the formula previously described; block RC is also supplied by the values err[i] and by the four predictor vectors P[i], because as previously described when none of the seven fuzzy rules has a sufficiently high activation level, the predictor vector having the smallest error function is chosen as vector C.

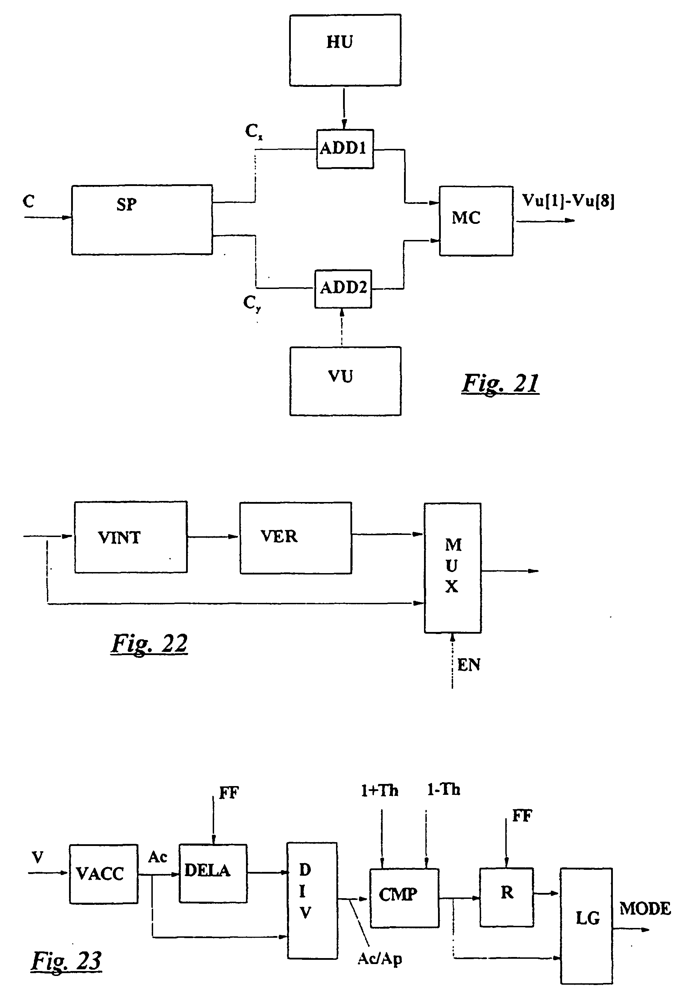

The structure of block CBUILD is depicted in Figure 21. This block is supplied by vector C, and determines the eight updated vectors Vu[1]-Vu[8].

Block SP splits vector C into its components Cx, Cy along the X and Y axes. Block HU provides the horizontal components of the sets of updates, which are added to Cx; similarly, block VU provides the vertical components of the sets of updates, which are added to Cy. Block MC merges the horizontal and vertical components Vu[n]x, Vu[n]y (n=1-8) of the updated vectors. The inner structure of blocks SP and MC depends on the particular data structure used to represent the motion vectors.

The eight updated vectors Vu[1]-Vu[8] are supplied to block SAD2, which is composed of eight units identical to that shown in Figure 19.

Block CSEL adds to the eight error functions calculated by block SAD2 the correct penalty values PEN1, PEN2. Then Block CSEL compares the eight error function values with added penalties, to determine the minimum error function value and the associated vector, which can be one of the eight updated vectors Vu[n]. The vector with the minimum error function value is selected as estimated motion vector for the block K(x,y) under examination.

Basically block CSEL is composed by adders (to add the penalty to the error functions associated to the eight updated vectors, calculated by block SAD2) and block suitable of evaluating the minimum among eight elements.

The structure of block VPROC is shown if Figure 22. As previously stated, the motion vector field is preferably estimated for a quincunx subsampled pattern of blocks. The missing motion vectors have to be interpolated. Block VPROC comprises a block VINT performing the interpolation previously described in connection with Figure 12 for obtaining the missing motion vectors. Block VPROC also comprises a block VER performing the "erosion" process previously described in connection with Figures 13 and 14. Block VINT is supplied by the output of block VMEM; the output of block VER supplies a multiplexer block MUX which is also supplied directly by the output of block VMEM. Control signal EN provided by block CNT selects the behavior of block VPROC, which must be active during the interpolation of the output vector field and not during the motion estimation phase.

Block FMDET has the structure shown in Figure 23.

The input V of block FMDET represents the currently estimated motion vector, provided at the output of block CSEL; this vector is accumulated by block VACC with the other motion vectors previously estimated and relating to the same image field; at the output of block VACC the value Ac is obtained. FF is a 100 Hz clock signal corresponding to the output field frequency, and supplies a register DELAY used to store the cumulated motion vector field relating to the a field, and to output said cumulated value at the time of the following field: the output of register DELAY is Ap.

A divider block DIV computes the ratio |Ac/Ap|, while a comparator block CMP determines wich condition is satisfied (i.e |Ac/Ap| $\cong$ 1, or |Ac/Ap|>1+Th, |Ac/Ap| < 1-Th). The result of this comparison is stored in a register R. A block LG implements the boolean rules 1) to 5) previously described.

The output MODE (MODE=camera_mode, MODE=film_mode(phase0), MODE=film_mode(phase1)) of block LG is supplied to block CNT so that the proper control signals EN, ENW can be generated only when required, i.e. only when motion estimated and compensated field interpolation is to be performed.

Block INT implements the required computation to interpolate the pixels of the missing field. Basically, it is composed by and adder and a median filter.

## Claims

**1.** Method for motion estimation for use in motion compensated Field Rate Up-conversion (FRU) for video applications, providing for

a) dividing an image field to be interpolated into a plurality of image blocks (IB), each image block made up of a respective set of image elements of the image field to be interpolated;

b) for each image block (K(x,y)) of at least a sub-plurality (Q1,Q2) of said plurality of image blocks, considering a group of neighboring image blocks (NB[0]-NB[3]);

c) determining an estimated motion vector for said image block (K(x,y)), describing the movement of said image block (K(x,y)) from a previous image field to a following image field between which the image field to be interpolated is comprised, on the basis of predictor motion vectors (P[0]-P[3]) associated to said group of neighboring image blocks;

d) determining each image element of said image block (K(x,y)) by interpolation of two corresponding image elements in said previous and following image fields related by said estimated motion vector;

**characterized in that** step c) provides for:

c1) applying to said each image block (K(x,y)) each of said predictor motion vectors to determine a respective pair of corresponding image blocks in said previous and following image fields, respectively;

c2) for each of said pairs of corresponding image blocks, evaluating an error function (err[i]) which is the Sum of luminance Absolute Difference (SAD) between corresponding image elements in said pair of corresponding image blocks;

c3) for each pair of said predictor motion vectors, evaluating a degree of homogeneity (H(i,j));

c4) for each pair of said predictor motion vectors, applying a fuzzy rule having an activation level (r[k]) which is higher the higher the degree of homogeneity of the pair of predictor motion vectors and the smaller the error functions of the pair of predictor motion vectors;

c5) determining an optimum fuzzy rule having the highest activation level (r[opt]), and determining the best predictor motion vector (P[min]) of the pair associated to said optimum fuzzy rule having the smaller error function;

c6) determining the estimated motion vector for said image block (K(x,y)) on the basis of said best predictor motion vector (P[min]).

2. Method according to claim 1, **characterized in that** said group of neighboring image blocks (NB[0]-NB[1]) comprises a first sub-group of image blocks (NB[0],NB[1]) preceding the image block (K(x,y)) in the scanning sequence of said sub-plurality of image blocks, and a second sub-group of image blocks (NB[2],NB[3]) following the image block in said scanning sequence.

3. Method according to claim 2, **characterized in that** said group of neighboring image blocks (NB[0]-NB[3]) comprises the four image blocks nearest neighboring to said image block (K(x,y)) in the diagonal directions.

4. Method according to claim 3, **characterized in that** said evaluating a degree of homogeneity (H(i,j)) comprises computing the sum of absolute differences between the components of said pair of predictor motion vectors (P[i], P[j]) along two orthogonal axes (x,y).

5. Method according to claim 4, **characterized in that** said applying a fuzzy rule comprises determining a fuzzy set "small" for the values of the error functions, determining a degree of membership of the error functions (err) to said fuzzy set "small", determining a first fuzzy set "high" for the values of the degree of homogeneity, and determining a degree of membership of the degree of homogeneity to the fuzzy set "high".

6. Method according to claim 5, **characterized in that** said activation level (r[k]) of a fuzzy rule comprises determining the minimum among the degree of membership of the degree of homogeneity to the first fuzzy set "high" and determining the degrees of membership of the error functions associated to the predictor motion vectors (P[i],P[j]) to which the fuzzy rule is applied to the fuzzy set "small".

7. Method according to any one of claims 2 to 6, **characterized in that** step c6) provides for chosing as estimated motion vector for said image block (K(x,y)) said best predictor motion vector (P[min]).

8. Method according to any one of claims 2 to 6, **characterized in that** step c) further provides for applying a further fuzzy rule having an activation level (r[6]) which is higher the higher the error functions of the predictor motion vectors (P[0]-P[3]) and the higher the predictor motion vectors (P[0],P[1]) associated to the blocks of said first sub-group (NB[0],NB[1]), and determining a candidate estimated motion vector (C) of said image block (K(x,y)) as a weighted average between the best predictor motion vector (P[min]) and the zero vector, the respective weights being the activation level (r[opt]) of said optimum fuzzy rule and the activation level (r[6]) of said further fuzzy rule.

9. Method according to claim 8, **characterized in that** said applying a further fuzzy rule comprises determining a first value (UP(x)) and a second value (UP(y)) which are the sum of the absolute components, respectively along the two axes (x,y), of the two predictor motion vectors (P[0],P[1]) associated to said first sub-group of blocks (NB[0],NB[1]), determining a second fuzzy set "high" for the first and second values, determining respective degrees of membership of the first and second values to the second fuzzy set "high", determining a third fuzzy set "high" for the values of the error functions (err[i]), determining respective degrees of membership (e'(i)) of the error function values (err[i]) to the third fuzzy set "high".

10. Method according to claim 9, **characterized in that** the evaluation of the activation level (r[6]) of the further fuzzy rule comprises determining the minimum among the degrees of membership to the second fuzzy set "high" of the first and second values (UP(x),UP(y)) and the degrees of membership of the error functions (err[i]) to the third fuzzy set "high".

11. Method according to any one of claims 8 to 10, **characterized in that** step c6) provides for choosing as estimated motion vector for said image block (K(x,y)) said candidate estimated motion vector (C).

12. Method according to any one of claims 8 to 10, **characterized in that** step c) further provides for applying to said candidate estimated motion vector (C) a set of updates for obtaining a corresponding set of updated motion vectors (Vu[1]-Vu[8]) and evaluating the error functions (err) associated to said updated motion vectors.

13. Method according to claim 12, **characterized in that** the updated motion vector having the minimum error function is chosen as the estimated motion vector for said block (K(x,y)).

14. Method according to claim 12, **characterized in that** respective penalty values (PEN1,PEN2) are added to the error functions (err) associated to said updated motion vectors (Vu[1]-Vu[8]), the penalty values depending on the difference in direction between the updated motion vectors and the candidate estimated motion vector (C).

15. Method according to any one of the preceding claims, **characterized in that** said sub-plurality (Q1,Q2) of the plurality of image blocks is made up of image blocks belonging to either one or the other of two complementary quincunx patterns.

16. Method according to claim 15, **characterized in that** the motion vectors (W) for each image block not belonging to said sub-plurality of image blocks (Q1,Q2) are determined by interpolating the estimated motion vectors (V1-V4) of respective neighboring blocks belonging to said sub-plurality.

17. Method according to claim 16, **characterized in that** after having determined the estimated motion vector for said image block (K(x,y)), the image block (K(x,y)) is further divided into four sub-blocks, and motion vectors ($E_{-1,+1}$-$E_{+1,-1}$) for each of said sub-blocks are calculated as averages between the estimated motion vector for said image block (K(x,y)) and motion vectors (Va-Vd) associated to respective neighboring image blocks.

18. Method according to any one of the preceding claims, **characterized in that** said evaluating an error function (err[i]) for each of pairs of corresponding image blocks in the previous and following image fields comprises transforming the two corresponding image blocks into progressive format.

19. Method according to any one of the preceding claims, **characterized by**:

determining if a received image field sequence ($O_0$,$E_0$,$O_1$) originates from a video camera or from a movie; and if the received image field sequence originates from a camera, for each pair of received image fields determining an interpolated intermediate image field by performing steps a) to d); if the received image field sequence originates from a movie, determining an intermediate image field by performing steps a) to d) only for alternate pairs of received image fields, said alternate pair of fields comprising two fields belonging to different image frames.

20. Method according to claim 19, **characterized in that** said determining if the received image field sequence originates from a video camera or from a movie provides for:

for each current received image field, evaluating a current accumulated value (Ac) of the estimated motion vectors describing movement of the image blocks between a previous received image field and said current received image field;

evaluating a current ratio (|Ac/Ap|) between the current accumulated value (Ac) and a previous accumulated value (Ap) of the estimated motion vectors describing movement of the image blocks between a further previous received image field and said previous received image field;

determining if said received field sequence originates from a movie on the basis of the value of said current ratio, the value of a previous ratio associated to the three previous received image fields preceding said current received image field, and a parity of the current received image field.

21. Device arranged to execute the method according to any one of the preceding claims, **characterized by** comprising:

**-)**    image element storage means (BUF1,BUF2) for storing image elements of the previous and following image fields for creating a search area in the previous and following image fields;

**-)**    addressing means (ADDGEN) for addressing selected image elements in said storage means;

**-)**    motion vector storage means (VMEM) for storing the estimated motion vectors;

**-)**    first computation means (SAD1) supplied with data by said storage means for evaluating said error functions (err[i]) associated to said predictor motion vectors (P[i]);

**-)**    a fuzzy computation unit (FUZZY) supplied with data by said first computation means and said motion vector storage means for determining said best predictor motion vector (P[min]) by applying said fuzzy rule to each pair of predictor motion vectors (P[i]) and to the values of the associated error functions;

**-)**    interpolation means (INT) supplied with data by said storage means for determining each image element of said image block (K(x,y)) by interpolation of two corresponding image elements in said previous and following image fields related by said estimated motion vector.

22. Device according to claim 21, **characterized in that** said fuzzy computation unit (FUZZY) comprises an homogeneity evaluator (HE) for evaluating the degree of homogeneity (H(ij)) of each pair of the predictor motion vectors (P[i]), a first membership evaluator (M1) supplied with said degree of homogeneity for determining a degree of membership of the degree of homogeneity to a first fuzzy set "high", a second membership evaluator (M2) supplied with said error functions (err[i]) for determining a degree of membership of the error functions to a fuzzy set "small", a first rule computation unit (RC1) supplied with data by the first and second membership evaluators for determining the activation level (r[k]) of said fuzzy rules, a rule selector (RS) supplied with data by the first rule computation unit for determining the fuzzy rule having the highest activation level (r[opt]), and a vector selector (VS) supplied with data by the rule selector and the predictor motion vectors (P[i]) for determining said best predictor motion vector (P[min]).

23. Device according to claim 22, **characterized in that** said fuzzy computation unit (FUZZY) further comprises a third membership evaluator (M3) supplied with said error function values (err[i]) for determining a degree of membership of the error function values to a second fuzzy set "high", an extension evaluator (EE) supplied with the predictor motion vectors (P[min]) for determining a first value (UP(x)) and a second value (UP(y)) providing a measure of extension of the predictor motion vectors respectively along two coordinate axes (x,y), a fourth membership evaluator (M4) for determining a degree of membership of the first and second values to the third fuzzy set "high", a second rule computation unit (RC2) supplied with data by the third and fourth membership evaluators (M3,M4) for determining the activation level of a further fuzzy rule, a rule composition unit (RC) supplied with data by the rule selector (RS), the vector selector (VS) and the second rule computation unit (RC2) for determining said candidate estimated motion vector (C).

24. Device according to claim 23, **characterized by** comprising a vector updating block (CBUILD) supplied with data by the fuzzy computation unit (FUZZY) for applying to the candidate estimated motion vector (C) a set of updates for obtaining updated motion vectors (Vu[1]-Vu[8]), second computation means (SAD2) for evaluating error functions associated to said updated motion vectors, and a candidate selector (CSEL) supplied with data by said second computation unit for determining the updated motion vector having the minimum associated error function.

25. Device according to claim 24, **characterized in that** said vector updating block (CBUILD) comprises a vector component splitter (SP) for determining the components (Cx,Cy) along said coordinate axes (x,y) of said candidate estimated motion vector (C), a first and a second adders (ADD1,ADD2) for respectively adding to each component of the candidate estimated motion vector a respective update value, and a vector component merger (MC) for merging together said components.

26. Device according to any one of claims 21 to 25, **characterized by** comprising detector means (FMDET) for detecting if a received image field sequence $(O_0,E_0,O_1)$ originates from a video camera or from a movie.

27. Device according to claim 26, **characterized in that** said detector means (FMDET) comprises a vector accumulation means (VACC) for calculating a current accumulated value (Ac) of the estimated motion vectors describing movement of the image blocks between a previous received image field and a current received image field; a first register (DELAY) for storing a previous accumulated value (Ap) of the estimated motion vectors describing movement of the image blocks between a further previous received image field and said previous received image field; a divider means (DIV) for evaluating a current ratio (|Ac/Ap|) between the current accumulated value (Ac) and the previous accumulated value (Ap); a second register (R) for storing the value of a previous ratio associated to the three previous received image fields preceding said current received image field, and means (CMP,LG) for determining if said received field sequence originates from a movie on the basis of the value of said current ratio, the value of said previous ratio and a parity of the current received image field.

**Patentansprüche**

1. Verfahren zur Bewegungsabschätzung zur Verwendung bei der Erhöhung der bewegungskompensierten Bildfrequenz (FRU) für Videoanwendungen, bei dem vorgesehen ist:

   a) Unterteilen eines zu interpolierenden Bildfeldes in eine Mehrzahl von Bildblöcken (IB), wobei jeder Bildblock aus einer entsprechenden Menge von Bildelementen des zu interpolierenden Bildfeldes besteht;
   b) Berücksichtigen einer Gruppe von Nachbar-Bildblöcken (NB[0]-NB[3]) für jeden Bildblock (K(x, y)) von zumindest einer Teilmenge (Q1, Q2) der Mehrzahl von Bildblöcken;
   c) Bestimmen eines geschätzten Bewegungsvektors für den Bildblock (K(x, y)), der die Bewegung des Bildblocks (K(x, y)) von einem vorhergehenden Bildfeld zu einem nachfolgenden Bildfeld, zwischen welchen das zu interpolierende Bildfeld enthalten ist, beschreibt, auf der Grundlage von Vorhersage-Bewegungsvektoren (P[0]-P[3]), die zu der Gruppe von Nachbar-Bildblöcken zugehörig sind;
   d) Bestimmen jedes Bildelementes des Bildblocks (K(x, y)) durch Interpolation von zwei korrespondierenden Bildelementen in dem vorhergehenden und dem nachfolgenden Bildfeld, die mit dem abgeschätzten Bewegungsvektor in Beziehung stehen; **dadurch gekennzeichnet, dass** in Schritt c) vorgesehen ist:

   c1) Anwenden jedes der Vorhersage-Bewegungsvektoren auf jeden Bildblock (K(x, y)) zum Bestimmen eines entsprechenden Paares von korrespondierenden Bildblöcken in dem vorhergehenden bzw. nachfolgenden Bildfeld;
   c2) Auswerten einer Fehlerfunktion (err[i]), die der Summe der absoluten Helligkeitsdifferenz (SAD) zwischen entsprechenden Bildelementen in dem Paar von korrespondierenden Bildblöcken entspricht, für jedes der Paare von korrespondierenden Bildblöcken;
   c) Auswerten eines Homogenitätsgrades (H(i, j)) für jedes Paar der Vorhersage-Bewegungsvektoren;
   c4) Anwenden einer Fuzzy-Regel mit einem Aktivierungsniveau (r[k]), das um so höher ist, je höher der Homogenitätsgrad des Paares von Vorhersage-Bewegungsvektoren ist und je kleiner die Fehlerfunktionen des Paares von Vorhersage-Bewegungsvektoren sind, für jedes Paar der Vorhersage-Bewegungsvektoren;
   c5) Bestimmen einer optimalen Fuzzy-Regel mit dem höchsten Aktivierungsniveau (r[opt]) und Bestimmen des besten Vorhersage-Bewegungsvektors (P[min]) des Paares, das zu der optimalen Fuzzy-Regel mit der kleineren Fehlerfunktion zugehörig ist; c6) Bestimmen des geschätzten Bewegungsvektors für den Bildblock (K(x,y)) auf der Grundlage des besten Vorhersage-Bewegungsvektors (P[min]).

2. Verfahren nach Anspruch 1, **dadurch gekennzeichnet, dass** die Gruppe von benachbarten Bildblöcken (NB[0]-NB[1]) eine erste Untergruppe von Bildblöcken (NB[0],NB[1]) aufweist, die dem Bildblock (K(x,y)) in der Abtastreihenfolge der Teilmenge von Bildblöcken vorangeht, und eine zweite Untergruppe von Bildblöcken (NB[2],NB[3]), die dem Bildblock in der Abtastreihenfolge nachfolgt.

3. Verfahren nach Anspruch 2, **dadurch gekennzeichnet, dass** die Gruppe von benachbarten Bildblöcken (NB[0]-NB[3]) die vier Bildblöcke aufweist, die in den Diagonalrichtungen dem Bildblock (K(x, y)) am nächsten benachbart sind.

4. Verfahren nach Anspruch 3, **dadurch gekennzeichnet, dass** das Auswerten eines Homogenitätsgrades (H(i, j)) das Berechnen der Summe der absoluten Differenzen zwischen den Komponenten des Paares von Vorhersage-Bewegungsvektoren (P[i],P[j]) entlang der zwei senkrechten Achsen (x, y)aufweist.

5. Verfahren nach Anspruch 4, **dadurch gekennzeichnet, dass** das Anwenden einer Fuzzy-Regel das Bestimmen einer Fuzzy-Menge "klein" für die Werte der Fehlerfunktionen, das Bestimmen eines Grades der Mitgliedschaft der Fehlerfunktionen (err) zu der Fuzzy-Menge "klein", das Bestimmen einer ersten Fuzzy-Menge "hoch" für die Werte des Homogenitätsgrades und das Bestimmen eines Grades der Mitgliedschaft des Homogenitätsgrades zu der Fuzzy-Menge "hoch" aufweist.

6. Verfahren nach Anspruch 5, **dadurch gekennzeichnet, dass** das Aktivierungsniveau (r[k]) einer Fuzzy-Regel das Bestimmen des Minimums unter den Mitgliedschaftsgraden der Homogenitätsgrade zu der ersten Fuzzy-Menge "hoch" und das Bestimmen der Mitgliedschaftsgrade der Fehlerfunktionen, die zu den Vorhersage-Bewegungsvektoren (P[i],P[j])zugehörig sind, auf die die Fuzzy-Regel auf die Fuzzy-Menge "klein" angewendet wird, aufweist.

7. Verfahren nach einem der Ansprüche 2 bis 6, **dadurch gekennzeichnet, dass** der Schritt c6) das Auswählen des besten Vorhersage-Bewegungsvektors (P[min]) als geschätzten Bewegungsvektor für den Bildblock (K(x,y)) vorsieht.

8. Verfahren nach einem der Ansprüche 2 bis 6, **dadurch gekennzeichnet, dass** der Schritt c) weiterhin das Anwenden einer weiteren Fuzzy-Regel mit einem Aktivierungsniveau (r[6]), das höher ist, je höher die Fehlerfunktion der Vorhersage-Bewegungsvektoren (P[0]-P[3]) und je höher die Vorhersage-Bewegungsvektoren (P[0],P[1]) sind, die den Blöcken der ersten Untergruppe (NB[0],NB[1]) zugeordnet sind, und das Bestimmen eines geschätzten Bewegungsvektor-Kandidaten (C) des Bildblocks (K(x, y)) als ein gewichtetes Mittel zwischen dem besten Vorhersage-Bewegungsvektor (P[min]) und dem Null-Vektor vorsieht, wobei die entsprechenden Gewichte das Aktivierungsniveau (r(opt)) der optimalen Fuzzy-Regel und das Aktivierungsniveau (r[6]) der weiteren Fuzzy-Regel sind.

9. Verfahren nach Anspruch 8, **dadurch gekennzeichnet, dass** das Anwenden einer weiteren Fuzzy-Regel das Bestimmen eines ersten Wertes (UP(x)) und eines zweiten Wertes (UP(y)), die die Summe der absoluten Komponenten entlang der entsprechenden beiden Achsen (x, y) der beiden Vorhersage-Bewegungsvektoren (P[0],P [1]) sind, die zu der ersten Untergruppe von Blöcken (NB[0],NB[1]) zugehörig sind, das Bestimmen einer zweiten Fuzzy-Menge "hoch" für die ersten und zweiten Werte, das Bestimmen der entsprechenden Mitgliedschaftsgrade des ersten und des zweiten Wertes zu der zweiten Fuzzy-Menge "hoch", das Bestimmen einer dritten Fuzzy-Menge "hoch" für die Werte der Fehlerfunktionen (err[i]), das Bestimmen der entsprechenden Mitgliedschaftsgrade (e'(i)) der Fehlerfunktionswerte (err[i]) zu der dritten Fuzzy-Menge "hoch" aufweist.

10. Verfahren nach Anspruch 9, **dadurch gekennzeichnet, dass** die Auswertung des Aktivierungsniveaus (r[6]) der weiteren Fuzzy-Regel das Bestimmen des Minimums unter den Mitgliedschaftsgraden zu der zweiten Fuzzy-Menge "hoch" des ersten und zweiten Wertes (UP(x),UP(y)) und den Mitgliedschaftsgraden der Fehlerfunktionen (err [i]) zu der dritten Fuzzy-Menge "hoch", aufweist.

11. Verfahren nach einem der Ansprüche 8 bis 10, **dadurch gekennzeichnet, dass** der Schritt c6) das Auswählen des geschätzten Bewegungsvektor-Kandidaten (C) als geschätzten Bewegungsvektor für den Bildblock (K(x, y)) vorsieht.

12. Verfahren nach einem der Ansprüche 8 bis 10, **dadurch gekennzeichnet, dass** der Schritt c) weiterhin das Anwenden einer Menge von Aktualisierungen auf den geschätzten Bewegungsvektor-Kandidaten (C)zum Erhalt einer entsprechenden Menge von aktualisierten Bewegungsvektoren (Vu[1]-Vu[8]) und das Auswerten der zu den aktualisierten Bewegungsvektoren zugehörigen Fehlerfunktionen (err) vorsieht.

13. Verfahren nach Anspruch 12, **dadurch gekennzeichnet, dass** der aktualisierte Bewegungsvektor mit der minimalen Fehlerfunktion als der geschätzte Bewegungsvektor für den Block (K(x, y)) gewählt wird.

14. Verfahren nach Anspruch 12, **dadurch gekennzeichnet, dass** entsprechende Strafwerte (PEN1, PEN2) zu den zu den aktualisierten Bewegungsvektoren (Vu[1]-Vu[8]) zugehörigen Fehlerfunktionen (err) addiert werden, wobei die Strafwerte von dem Unterschied in der Richtung zwischen den aktualisierten Bewegungsvektoren und dem geschätzten Bewegungsvektor-Kandidaten (C) abhängen.

**15.** Verfahren nach einem der vorangehenden Ansprüche, **dadurch gekennzeichnet, dass** die Teilmenge (Q1, Q2) der Mehrzahl von Bildblöcken aus Bildblöcken besteht, die zu dem einen oder dem anderen der beiden komplementären schachbrettförmigen Muster gehören.

**16.** Verfahren nach Anspruch 15, **dadurch gekennzeichnet, dass** die Bewegungsvektoren (W) für jeden Bildblock, der nicht zu der Teilmenge der Menge von Bildblöcken (Q1,Q2) gehört, durch Interpolieren der geschätzten Bewegungsvektoren (V1-V4) von entsprechenden benachbarten Blöcken, die zu der Teilmenge gehören, bestimmt wird.

**17.** Verfahren nach Anspruch 16, **dadurch gekennzeichnet, dass** nachdem der geschätzte Bewegungsvektor für den Bildblock (K(x,y)) bestimmt wurde, der Bildblock (K(x, y)) weiter in vier Subblöcke unterteilt wird und Bewegungsvektoren ($E_{-1,+1}$-$E_{+1,-1}$) für jeden der Subblöcke als Mittelwerte zwischen dem geschätzten Bewegungsvektor für den Bildblock (K(x, y)) und den zu den entsprechenden benachbarten Bildblöcken zugehörigen Bewegungsvektoren (Va-Vd) berechnet werden.

**18.** Verfahren nach einem der vorangehenden Ansprüche, **dadurch gekennzeichnet, dass** das Auswerten einer Fehlerfunktion (err[i]) für jedes der Paare von korrespondierenden Bildblöcken in dem vorhergehenden und nachfolgenden Bildfeld das Umwandeln der beiden korrespondierenden Bildblöcke in ein hochentwickeltes Format aufweist.

**19.** Verfahren nach einem der vorhergehenden Ansprüche, **gekennzeichnet durch**:

Bestimmen, ob eine empfangene Bildfeld-Abfolge ($O_0$,$E_0$,$O_1$) von einer Videokamera oder einem Film stammt; und
Bestimmen eines interpolierten Zwischen-Bildfeldes **durch** Ausführen der Schritte a) bis d) für jedes Paar von empfangenen Bildfeldern, wenn die empfangene Bildfeld-Abfolge von einer Kamera stammt;
Bestimmen eines Zwischen-Bildfeldes **durch** Ausführen der Schritte a) bis d) lediglich für alternierende Paare von empfangenen Bildfeldern, wobei das alternierende Paar von Feldern zwei Felder umfasst, die zu verschiedenen Bildrahmen gehören.

**20.** Verfahren nach Anspruch 19, **dadurch gekennzeichnet, dass** das Bestimmen, ob die empfangene Bildfeld-Abfolge von einer Videokamera oder einem Film stammt, vorsieht:

Auswerten eines aktuellen akkumulierten Wertes (Ac) der geschätzten Bewegungsvektoren, die die Bewegung der Bildblöcke zwischen einem vorhergehenden empfangenen Bildfeld und dem aktuellen empfangenen Bildfeld beschreiben, für jedes aktuelle empfangene Bildfeld;
Auswerten eines aktuellen Verhältnisses (|Ac/Ap|) zwischen dem aktuellen akkumulierten Wert (Ac) und einem vorhergehenden akkumulierten Wert (Ap) der geschätzten Bewegungsvektoren, die die Bewegung der Bildblöcke zwischen einem weiteren vorhergehenden empfangenen Bildfeld und dem vorhergehenden empfangenen Bildfeld beschreiben; .
Bestimmen, ob die empfangene Feld-Abfolge von einem Film stammt auf der Grundlage des Wertes des aktuellen Verhältnisses, des Wertes eines vorhergehenden Verhältnisses, das zu den drei vorhergehenden empfangenen Bildfeldern, die dem aktuellen Bildfeld vorangehen, zugehörig ist, und einer Parität des aktuellen empfangenen Bildfeldes.

**21.** Vorrichtung zum Ausführen des Verfahrens nach einem der vorhergehenden Ansprüche, **dadurch gekennzeichnet, dass** sie aufweist:

**-)** ein Bildelement-Speichermittel (BUF1,BUF2) zum Speichern von Bildelementen des vorhergehenden und nachfolgenden Bildfeldes zum Erzeugen eines Suchbereichs in dem vorhergehenden und dem nachfolgenden Bildfeld;
**-)** ein Adressierungsmittel (ADDGEN) zum Adressieren ausgewählter Bildelemente in dem Speichermittel;
**-)** ein Bewegungsvektor-Speichermittel (VMEM) zum Speichern der geschätzten Bewegungsvektoren;
**-)** ein erstes Berechnungsmittel (SAD1), das durch das Speichermittel mit Daten beliefert wird, zum Auswerten der zu den Vorhersage-Bewegungsvektoren (P[i]) zugehörigen Fehlerfunktionen (err[i]);

**-)** eine Fuzzy-Berechnungseinheit (FUZZY), die durch das erste Berechnungsmittel und das Bewegungsvektor-Speichermittel mit Daten beliefert wird, zum Bestimmen des besten Vorhersage-Bewegungsvektors (P[min]) durch Anwenden der Fuzzy-Regel auf jedes Paar von Vorhersage-Bewegungsvektoren (P[i]), und die Werte der zugehörigen Fehlerfunktionen;

**-)** ein Interpolationsmittel (INT), das durch das Speichermittel mit Daten beliefert wird, zum Bestimmen jedes Bildelements des Bildblocks (K(x,y)) durch Interpolation von zwei entsprechenden Bildelementen in dem vorhergehenden und dem nachfolgenden Bildfeld, die durch den geschätzten Bewegungsvektor in Beziehung stehen.

**22.** Vorrichtung nach Anspruch 21, **dadurch gekennzeichnet, dass** die Fuzzy-Berechnungseinheit (FUZZY) einen Homogenitätsauswerter (HE) zum Auswerten des Grades der Homogenität (H(i,j)) von jedem Paar der Vorhersage-Bewegungsvektoren (P[i]), einen ersten Mitgliedschaftsbewerter (M1), der mit dem Homogenitätsgrad beliefert wird, zum Bestimmen eines Grades der Mitgliedschaft des Homogenitätsgrades zu einer ersten Fuzzy-Menge "hoch", einen zweiten Mitgliedschaftsbewerter (M2), der mit den Fehlerfunktionen (err[i]) beliefert wird, zum Bestimmen eines Grades der Mitgliedschaft der Fehlerfunktionen zu einer Fuzzy-Menge "klein", eine erste Regel-Berechnungseinheit (RC1), die durch den ersten und den zweiten Mitgliedschafts-Bewerter mit Daten beliefert wird, zum Bestimmen des Aktivierungsniveaus (r[k]) der Fuzzy-Regeln, einen Regelwähler (RS), der durch die erste Regel-Berechnungseinheit mit Daten beliefert wird, zum Bestimmen der Fuzzy-Regel mit dem höchsten Aktivierungsniveau (r[opt]) und einen Vektorwähler (VS), der durch den Regelwähler und die Vorhersage-Hewegungsvektoren-(P[i]) mit Daten beliefert wird zum Bestimmen des besten Vorhersage-Bewegungsvektors (P[min]) aufweist.

**23.** Vorrichtung nach Anspruch 22, **dadurch gekennzeichnet, dass** die Fuzzy-Berechnungseinheit (FUZZY) weiterhin einen dritten Mitgliedschaftsbewerter (M3), der mit den Fehlerfunktionswerten (err[i]) beliefert wird, zum Bestimmen eines Grades der Mitgliedschaft der Fehlerfunktionswerte zu einer zweiten Fuzzy-Menge "hoch", einen Fortsetzungs-Bewerter (EE), der mit den Vorhersage-Bewegungsvektoren (P[min]) beliefert wird, zum Bestimmen eines ersten Wertes (UP(x)) und eines zweiten Wertes (UP(y)), die ein Maß der entsprechenden Fortsetzung der Vorhersage-Bewegungsvektoren entlang der beiden Koordinatenachsen (x,y) bereitstellen, einen vierten Mitgliedschaftsbewerter (M4) zum Bestimmen eines Grades der Mitgliedschaft des ersten und des zweiten Wertes zu der dritten Fuzzy-Menge "hoch", eine zweite Regel-Berechnungseinheit (RC2), die durch den dritten und den vierten Mitgliedschaftsbewerter (M3,M4) mit Daten beliefert wird, zum Bestimmen des Aktivierungsniveaus einer weiteren Fuzzy-Regel, eine Regel-Zusammensetzungseinheit (RC), die durch den Regelwähler (RS) mit Daten beliefert wird, den Vektorwähler (VS) und die zweite Regel-Berechnungseinheit (RC2) zum Bestimmen des geschätzten Bewegungsvektor-Kandidaten (C) aufweist.

**24.** Vorrichtung nach Anspruch 23, **dadurch gekennzeichnet, dass** sie einen Vektor-Aktualisierungsblock (CBUILD), der durch die Fuzzy-Berechnungseinheit (FUZZY) mit Daten beliefert wird, zum Anwenden einer Menge von Aktualisierungen auf den geschätzten Bewegungsvektor-Kandidaten (C) zum Erhalt von aktualisierten Bewegungsvektoren (Vu[1]-Vu[8]), ein zweites Berechnungsmittel (SAD2) zum Auswerten der zu den aktualisierten Bewegungsvektoren zugehörigen Fehlerfunktionen und einen Kandidatenwähler (CSEL), der durch die zweite Berechnungseinheit mit Daten beliefert wird, zum Bestimmen des aktualisierten Bewegungsvektors mit der zugehörigen minimalen Fehlerfunktion, aufweist.

**25.** Vorrichtung nach Anspruch 24, **dadurch gekennzeichnet, dass** der Vektor-Aktualisierungsblock (CBUILD) einen Vektor-Komponentenaufspalter (SP) zum Bestimmen der Komponenten (Cx,Cy) entlang der Koordinatenachsen (x,y) des geschätzten Bewegungsvektor-Kandidaten (C), einen ersten und einen zweiten Addierer (ADD1,ADD2) zum entsprechenden Addieren eines entsprechenden Aktualisierungswertes zu jeder Komponente des geschätzten Bewegungsvektor-Kandidaten und einen Vektor-Komponentenmischer (MC) zum Zusammenmischen der Komponenten aufweist.

**26.** Vorrichtung nach einem der Ansprüche 21 bis 25, **dadurch gekennzeichnet, dass** sie ein Erfassungsmittel (FMDET) zum Erfassen, ob eine empfangene Bildfeld-Abfolge ($O_0$,$E_0$,$O_1$) von einer Videokamera oder von einem Film stammt, aufweist.

**27.** Vorrichtung nach Anspruch 26, **dadurch gekennzeichnet, dass** das Erfassungsmittel (FMDET) ein Vektor-Akkumulationsmittel (VACC) zum Berechnen eines laufenden akkumulierten Wertes (Ac) der geschätzten Bewegungsvektoren, die die Bewegung der Bildblöcke zwischen einem vorhergehenden empfangenen Bildfeld und einem aktuellen empfangenen Bildfeld beschreiben, ein erstes Register (DELAY) zum Speichern eines vorhergehenden akkumulierten Wertes (Ap) der geschätzten Bewegungsvektoren, die die Bewegung der Bildblöcke zwischen einem weiteren vorhergehenden empfangenen Bildfeld und dem vorhergehenden empfangenen Bildfeld beschreiben, ein Teilermittel (DIV) zum Berechnen eines aktuellen Verhältnisses (|Ac/Ap|) zwischen dem aktuellen akkumulierten Wert (Ac) und dem vorhergehenden akkumulierten Wert (Ap), ein zweites Register (R) zum Speichern des Wertes eines vorhergehenden Verhältnisses, das zu den drei vorhergehenden empfangenen Bildfeldern, die dem aktuellen empfangenen Bildfeld vorangehen, zugehörig ist, und ein Mittel (CMP,LG) zum Bestimmen, ob die empfangene Feld-Abfolge von einem Film stammt, auf der Grundlage des Wertes des aktuellen Verhältnisses, des Wertes des vorhergehenden Verhältnisses und einer Parität des aktuellen empfangenen Bildfeldes, aufweist.

**Revendications**

1. Procédé d'estimation de déplacement destiné à être utilisé pour l'augmentation de la vitesse de trame compensée en déplacement (FRU) dans des applications vidéo comprenant les étapes suivantes :

   a) diviser une trame d'image à interpoler en une pluralité de blocs d'image (IB), chaque bloc d'image étant constitué d'un ensemble respectif d'éléments d'image de la trame d'image à interpoler ;
   b) pour chaque bloc d'image (K(x,y)) d'au moins une sous-pluralité (Q1, Q2) de ladite pluralité de blocs d'image, considérer un groupe de blocs d'image voisins (NB[0]-NB[3]) ;
   c) déterminer un vecteur déplacement estimé pour le bloc d'image (K(x,y)), décrivant le déplacement du bloc d'image (K(x,y)) d'une trame d'image précédente à une trame d'image suivante entre lesquelles la trame d'image à interpoler est comprise, sur la base de vecteurs prédicteurs de déplacement (P[0]-P[3]) associés au groupe de blocs d'image voisins ;
   d) déterminer chaque élément d'image du bloc d'image (K(x,y)) par inteporlation de deux éléments d'image correspondant dans les trames d'image précédente et suivante associées au vecteur déplacement estimé ;

   **caractérisé en ce que** l'étape c) comprend les étapes suivantes :

   c1) appliquer à chaque bloc d'image (K(x,y)) chacun des vecteurs prédicteurs de déplacement pour déterminer une paire respective de blocs d'image correspondants dans les trames d'image précédente et suivante, respectivement ;
   c2) pour chacune des paires de blocs d'image correspondantes, évaluer une fonction d'erreur (err[i]) qui est la somme de la différence absolue de luminance (SAD) entre des éléments d'image correspondants dans ladite paire de blocs d'image correspondante ;
   c3) pour chaque paire de vecteurs prédicteurs de déplacement, évaluer un degré d'homogénéité (H(i,j)) ;
   c4) pour chaque paire de vecteurs prédicteurs de déplacement, appliquer une règle floue ayant un niveau d'activation (r[k]) qui est d'autant plus élevé que le degré d'homogénéité de la paire de vecteurs prédicteurs de déplacement est élevé et que les fonctions d'erreur de la paire de vecteurs prédicteurs de déplacement sont petites ;
   c5) déterminer une règle floue optimale ayant le niveau d'activation le plus élevé (r[opt]), et déterminer le meilleur vecteur prédicteur de déplacement (P[min]) de la paire associée à la règle floue optimale ayant la plus petite fonction d'erreur ;
   c6) déterminer le vecteur de déplacement estimé pour le bloc d'image (K(x,y)) sur la base du meilleur vecteur prédicteur de déplacement (P[min]).

2. Procédé selon la revendication 1, **caractérisé en ce que** le groupe de blocs d'image voisins (NB[0]-NB[3]) comprend un premier sous-groupe de blocs d'image (NB[0], NB[1]) précédant le bloc d'image (K(x,y)) dans la séquence d'analyse de la sous-pluralité de blocs d'image (K(x,y)) et un second sous-groupe de blocs d'image (NB[2], NB[3]) suivant le bloc d'image dans la séquence d'analyse.

3. Procédé selon la revendication 2, **caractérisé en ce que** le groupe de blocs d'image voisins (NB[0]-NB[3]) comprend les quatre blocs d'image les plus proches voisins du bloc d'image (K(x,y)) dans les directions diagonales.

4. Procédé selon la revendication 3, **caractérisé en ce que** l'évaluation d'un degré d'homogénéité (H(i,j)) comprend le calcul de la somme des différences absolues entre les composantes des vecteurs prédicteurs de déplacement (P[i], P[j]) selon deux axes orthogonaux (x, y).

**5.** Procédé selon la revendication 4, **caractérisé en ce que** l'application d'une règle floue comprend la détermination d'un ensemble flou "petit" pour les valeurs des fonctions d'erreur, la détermination d'un degré d'appartenance des fonctions d'erreur (err) à l'ensemble flou "petit", la détermination d'un premier ensemble flou "grand" pour les valeurs du degré d'homogénéité, et la détermination d'un degré d'appartenance du degré d'homogénéité à l'ensemble flou "grand".

**6.** Procédé selon la revendication 5, **caractérisé en ce que** le niveau d'activation (r[k]) d'une règle floue comprend la détermination du minimum parmi le degré d'appartenance du degré d'homogénéité du premier ensemble flou "grand" et la détermination des degrés d'appartenance des fonctions d'erreur associées aux vecteurs prédicteurs de déplacement (P[i], P[j]) auxquels la règle floue est appliquée à l'ensemble flou "petit".

**7.** Procédé selon l'une quelconque des revendications 2 à 6, **caractérisé** en que l'étape c6) prévoit de choisir comme vecteur de déplacement estimé pour le bloc d'image (K(x,y)) ledit meilleur vecteur prédicteur de déplacement (P[min]).

**8.** Procédé selon l'une quelconque des revendications 2 à 6, **caractérisé en ce que** l'étape c) prévoit en outre d'appliquer une autre règle floue ayant un niveau d'activation (r[6]) qui est d'autant plus élevé que les fonctions d'erreur des vecteurs prédicteurs de déplacement (P[0]-P[3]) sont élevées et que les vecteurs prédicteurs de déplacement (P[0], P[1]) associés aux blocs du.premier sous-groupe (NB[0], NB[1]) sont élevés, et de déterminer un vecteur déplacement estimé candidat (C) du bloc d'image (K(x,y)) en tant que moyenne pondérée entre le meilleur vecteur prédicteur de déplacement (P[min]) et le vecteur nul, les poids respectifs étant le niveau d'activation (r[opt]) de la règle floue optimale et le niveau d'activation (r[6]) de l'autre règle floue.

**9.** Procédé selon la revendication 8, **caractérisé en ce que** l'application de l'autre règle floue comprend la détermination d'une première valeur (UP(x)) et d'une seconde valeur (UP(y)) qui sont la somme des composantes absolues, respectivement selon les deux axes (x, y) des deux vecteurs prédicteurs de déplacement (P[0], P[1]) associés au premier sous-groupe de blocs (NB[0], NB[1]), la détermination d'un second ensemble flou "grand" pour les première et second valeurs, la détermination de degrés respectifs d'appartenance des première et seconde valeurs au second ensemble flou "grand", la détermination d'un troisième ensemble flou "grand" pour les valeurs des fonctions d'erreur (err[i]), la détermination des données respectives d'appartenance (e'(i)) des valeurs de fonction d'erreur (err[i]) au troisième ensemble flou "grand".

**10.** Procédé selon la revendication 9, **caractérisé en ce que** l'évaluation du niveau d'activation (r[6]) de l'autre règle floue comprend la détermination du minimum parmi les degrés d'appartenance au second ensemble flou "grand" des première et seconde valeurs (UP(x), UP(y)) et les degrés d'appartenance des fonctions d'erreur (err[i]) au troisième ensemble flou "grand".

**11.** Procédé selon l'une quelconque des revendications 8 à 10, **caractérisé en ce que** l'étape c6) prévoit de choisir en tant que vecteur déplacement estimé pour le bloc d'image (K(x,y)) le vecteur déplacement estimé candidat (C).

**12.** Procédé selon l'une quelconque des revendications 8 à 10, **caractérisé en ce que** l'étape c) prévoit en outre d'appliquer au vecteur déplacement estimé candidat (C) un ensemble de mises à jour pour obtenir un ensemble correspondant de vecteurs déplacement mis à jour (Vu[1]-Vu[8]), et d'évaluer les fonctions d'erreur (err) associées aux vecteurs déplacement mis à jour.

**13.** Procédé selon la revendication 12, **caractérisé en ce que** le vecteur déplacement mis à jour ayant la fonction d'erreur minimum est choisi en tant que vecteur déplacement estimé pour ledit bloc (K(x,y)).

**14.** Procédé selon la revendication 12, **caractérisé en ce que** des valeurs de pénalité respectives (PEN1, PEN2) sont ajoutées aux fonctions d'erreurs (err) associées aux vecteurs déplacement mis à jour (Vu[1]-Vu[8]), les valeurs de pénalité dépendant de la différence de direction entre les vecteurs déplacement mis à jour et le vecteur déplacement estimé candidat (C).

**15.** Procédé selon l'une quelconque des revendications précédentes, **caractérisé en ce que** la sous-pluralité (Q1, Q2) de la pluralité de blocs d'image est constituée de blocs d'image appartenant à l'un ou l'autre de deux motifs complémentaires en quinconce.

**16.** Procédé selon la revendication 15, **caractérisé en ce que** les vecteurs déplacement (W) pour chaque bloc d'image n'appartenant pas à la sous-pluralité de blocs d'image (Q1, Q2) sont déterminés en interpolant les vecteurs déplacement estimés (V1-V4) des blocs voisins respectifs appartenant à ladite sous-pluralité.

17. Procédé selon la revendication 16, **caractérisé en ce que**, après avoir déterminé le vecteur déplacement estimé pour le bloc d'image (K(x,y)), le bloc d'image (K(x,y)) est en outre divisé en quatre sous-blocs, et les vecteurs déplacement ($E_{-1,+1}$-$E_{+1,-1}$) pour chacun des sous-blocs sont calculés en tant que moyenne entre le vecteur déplacement estimé pour le bloc d'image (K(x,y)) et les vecteurs déplacement (Va-Vd) associés aux blocs d'image voisins respectifs.

18. Procédé selon l'une quelconque des revendications précédentes, **caractérisé en ce que** l'évaluation d'une fonction d'erreur (err[i]) pour chacune des paires de blocs d'image correspondantes dans les trames d'image précédente et suivante comprend la transformation des deux blocs d'image correspondants en format progressif.

19. Procédé selon l'une quelconque des revendications précédentes, **caractérisé par** les étapes suivantes :

déterminer si une séquence de trames d'image reçues ($O_0$, $E_0$, $O_1$) provient d'une caméra vidéo ou d'un film ; et
si la séquence de trame d'image reçue provient d'une caméra, pour chaque paire de trames d'image reçues, déterminer une trame d'image intermédiaire interpolée en mettant en oeuvre les étapes a) à d) ;
si la séquence de trames d'image reçues provient d'un film, déterminer une trame d'image intermédiaire en mettant en oeuvre les étapes a) à d) seulement pour des paires alternées de trames d'image reçues, les paires alternées de trames comprenant deux trames appartenant à deux trames d'images distinctes.

20. Procédé selon la revendication 19, **caractérisé en ce que** la détermination du fait qu'une séquence de trames d'image provient d'une caméra ou d'un film prévoit :

pour chaque trame d'image reçue courante, évaluer une valeur accumulée courante (Ac) pour les vecteurs déplacement estimés décrivant le déplacement des blocs d'image entre une trame d'image reçue précédente et la trame d'image reçue courante ;
évaluer un rapport courant (|Ac/Ap|) entre la valeur accumulée courante (Ac) et une valeur accumulée précédente (Ap) des vecteurs déplacement estimés décrivant le déplacement des blocs d'image entre une autre trame d'image précédente reçue et la trame d'image reçue précédente ;
déterminer si la séquence de trames reçues provient d'un film sur la base de la valeur du rapport courant, de la valeur d'un rapport précédent associé aux trois trames d'image reçues précédentes précédant la trame d'image reçue courante, et de la parité de la trame d'image reçue courante.

21. Dispositif adapté à mettre en oeuvre le procédé selon l'une quelconque des revendications précédentes, **caractérisé en ce qu'**il comprend :

des moyens de stockage d'éléments d'image (BUF1, BUF2) pour stocker des éléments d'image des trames d'image précédente et suivante pour créer une zone de recherche dans les trames d'image précédente et suivante ;
des moyens d'adressage (ADDGEN) pour adresser des éléments d'image choisis dans les moyens de stockage ;
des moyens de stockage de vecteur déplacement (VMEM) pour mémoriser les vecteurs déplacement estimés ;
des premier moyens de calcul (SAD1) recevant des données des moyens de stockage pour évaluer les fonctions d'erreur (err[i]) associées aux vecteurs prédicteurs de déplacement (P[i]) ;
un module de calcul flou (FUZZY) recevant des données des premiers moyens de calcul et des moyens de stockage de vecteur déplacement pour déterminer le meilleur vecteur prédicteur de déplacement (P[min]) en appliquant la règle floue à chaque paire de vecteurs prédicteurs de déplacement (P[i]) et aux valeurs des fonctions d'erreur associées ;
des moyens d'interpolation (INT) recevant les données des moyens de stockage pour déterminer chaque élément d'image du bloc d'image (K(x,y)) par interpolation de deux éléments d'image correspondants dans les trames d'image précédente et suivante associées par le vecteur déplacement estimé.

22. Dispositif selon la revendication 21, **caractérisé en ce que** le module de calcul flou (FUZZY) comprend un évaluateur d'homogénéité (HE) pour évaluer le degré d'homogénéité (H(i,j) de chaque paire de vecteurs prédicteurs de déplacement (P[i]), un premier évaluateur d'appartenance (M1) recevant les données de degré d'homogénéité pour déterminer un degré d'appartenance du degré d'homogénéité à un premier ensemble flou "grand", un second évaluateur d'appartenance (M2) recevant les données des fonctions d'erreur (err[i]) pour déterminer un degré d'appartenance des fonctions d'erreur à un ensemble flou "petit", un premier module de calcul de règle (RC1) recevant les données des premier et second évaluateurs d'appartenance pour déterminer le niveau d'activation (r[k]) des règles floues, un sélecteur de règle (RS) recevant les données du premier module de calcul de règle pour déterminer la règle floue ayant le plus haut niveau d'activation (r[opt]), et un sélecteur de vecteur (VS) recevant les données du sélecteur de règle et les vecteurs prédicteurs de déplacement (P[i]) pour déterminer le meilleur vecteur prédicteur de déplacement (P[min]).

23. Dispositif selon la revendication 22, **caractérisé en ce que** le module de calcul flou (FUZZY) comprend un troisième évaluateur d'appartenance (M3) recevant les valeurs de fonction d'erreur (err[i]) pour déterminer un degré d'appartenance des valeurs des fonctions d'erreur à un second ensemble flou "grand", un évaluateur d'extension (EE) recevant les vecteurs prédicteurs de déplacement (P[min]) pour déterminer une première valeur (UP(x)) et une seconde valeur (UP(y)) fournissant une mesure d'extension des vecteurs prédicteurs de déplacement, respectivement selon deux axes de coordonnées (x, y), un quatrième évaluateur d'appartenance (M4) pour déterminer le degré d'appartenance des première et seconde valeurs à un troisième ensemble flou "grand", un second module de calcul de règle (RC2) recevant les données des troisième et quatrième évaluateurs d'appartenance (M3, M4) pour déterminer le niveau d'activation d'une autre règle floue, un module de composition de règle (RC) recevant les données du sélecteur de règle (RS), du sélecteur de vecteur (VS) et du second module de calcul de règle (RC2) pour déterminer le vecteur déplacement estimé candidat (C).

24. Dispositif selon la revendication 23, **caractérisé en ce qu'**il comprend un bloc de mise à jour de vecteur (CBUILD) recevant les données du module de calcul flou (FUZZY) pour appliquer au vecteur déplacement estimé candidat (C) un ensemble de mises à jour pour obtenir des vecteurs de déplacement mis à jour (Vu[1]-Vu[8]), des second mayens de calcul (SAD2) pour évaluer les fonctions d'erreur associées aux vecteurs déplacement mis à jour, et un sélecteur de candidat (CSEL) recevant les données du second module de calcul pour déterminer le vecteur déplacement mis à jour ayant la fonction d'erreur associée minimale.

25. Dispositif selon la revendication 24, **caractérisé en ce que** le bloc de mise à jour de vecteur (CBUILD) comprend un séparateur de composantes vectorielles (SP) pour déterminer les composantes (Cx, Cy) le long des axes de coordonnées (x, y) du vecteur déplacement estimé candidat (C), un premier et un second additionneur (ADD1, ADD2) pour additionner respectivement à chaque composante du vecteur déplacement estimé candidat une valeur mise à jour respective et un dispositif de fusion de composantes vectorielles (MC) pour combiner lesdites composantes.

26. Dispositif selon l'une quelconque des revendications 21 à 25, **caractérisé en ce qu'**il comprend des moyens détecteurs (FMDET) pour détecter si une séquence de trames d'image reçues ($O_0$, $E_0$, $O_1$) provient d'une caméra vidéo ou d'un film.

27. Dispositif selon la revendication 26, **caractérisé en ce que** les moyens détecteurs (FMDET) comprennent un moyen d'accumulation vectoriel (VACC) pour calculer une valeur accumulée courante (Ac) des vecteurs déplacement estimés décrivant le déplacement des blocs image entre une trame d'image reçue précédente et une trame d'image reçue courante ; un premier registre (DELAY) pour mémoriser une valeur accumulée précédente (Ap) des vecteurs déplacement estimés décrivant le déplacement des trames d'image entre une trame d'image reçue plus que précédente et la trame d'image reçue précédente ; un moyen diviseur (DIV) pour évaluer un rapport courant (|Ac/Ap|) entre la valeur accumulée courante (Ac) et la valeur accumulée précédente (Ap), un second registre (R) pour mémoriser la valeur d'un rapport précédent associé aux trois trames d'image reçues précédentes précédant la trame d'image reçue courante, et des moyens (CMP, LG) pour déterminer si la séquence de trames reçues provient d'un film sur la base de la valeur du rapport courant, de la valeur du rapport précédent et de la parité de la trame d'image reçue courante.

position

time

Fig. 1 (PRIOR ART)

MO

MO

B

I

AB

A

Field T    Field T+1/2    Field T+1

Fig.2 (PRIOR ART)

IB

Fig.3 (PRIOR ART)

*Fig. 4 (PRIOR ART)*

*Fig.5*

Q1

Q2

*Fig. 6*

0.5

Px1

Px3

Px2

Px5

Px6

Px4

**Previous field**

**Current field**

*Fig. 7*

Available pixels

Pixels to be interpolated

*Fig. 8*

$h(i,j)$

1

0

0

H1

$H(i,j)$

*Fig. 9*

$e(i)$

1

0

0

err1

err2

$err(i)$

*Fig. 10*

up

1

0

0

UP1

UP2

UP

*Fig. 11*

Vectors computed

Vectors to be interpolated

*Fig. 12*

*Fig. 13*

*Fig. 14*

*Fig. 15*

Field T   Field T+1/2   Field T+1

*Fig. 16*

Current field     Previous field

☐ Available pixels

▭ Pixels to be interpolated

*Fig. 17*

*Fig. 18*

*Fig. 19*

*Fig. 20*

*Fig. 21*

*Fig. 22*

*Fig. 23*